(19) Europäisches Patentamt
European Patent Office
Office européen des brevets

(11) EP 2 858 197 A1

(12) **EUROPEAN PATENT APPLICATION**

(43) Date of publication:
**08.04.2015 Bulletin 2015/15**

(21) Application number: **14187995.7**

(22) Date of filing: **07.10.2014**

(51) Int Cl.:
***H02J 3/12*** *(2006.01)*
***G06Q 50/06*** *(2012.01)*
***H02J 3/14*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.10.2013 JP 2013210561**

(71) Applicant: **Hitachi, Ltd.**
**Tokyo 100-8280 (JP)**

(72) Inventors:
- **Kawai, Yasuhiro**
**Tokyo, 100-8280 (JP)**
- **Watanabe, Tohru**
**Tokyo, 100-8280 (JP)**
- **Utsumi, Masato**
**Tokyo, 100-8280 (JP)**

(74) Representative: **MERH-IP**
**Matias Erny Reichl Hoffmann**
**Paul-Heyse-Strasse 29**
**80336 München (DE)**

# (54) Power demand adjustment system, power demand adjustment method, and power adjustment apparatus

(57) [Problem] To adjust power demand in accordance with the state of a power supply.

[Solution] A voltage control apparatus (1302) controls a voltage value of power that is supplied to a consumer from either a distribution substation or a pole-mounted transformer. A power management apparatus (1102) calculates an adjustable amount of demand for enabling power demand from a plurality of consumers to be adjusted, and sends the adjustable amount of demand to a demand adjustment plan management apparatus (1202). The demand adjustment plan management apparatus(1202), on the basis of a request value for an amount of demand adjustment and the adjustable amount of demand, prepares a demand adjustment plan for satisfying the request value for the amount of demand adjustment, and sends the demand adjustment plan to the power management apparatus (1102). The power management apparatus (1102), on the basis of the demand adjustment plan, prepares a voltage control plan for controlling the output voltage value of the voltage control apparatus (1302), and causes the output voltage value of the voltage control apparatus (1302) to be controlled in accordance with the voltage control plan.

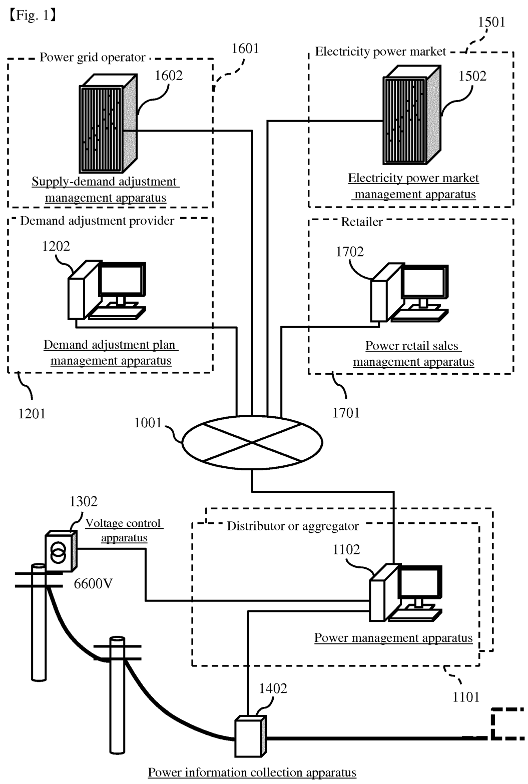


EP 2 858 197 A1

## Description

BACKGROUND OF THE INVENTION

1. Field of the Invention

The present invention relates to a power demand adjustment system, a power demand adjustment method, and a power management apparatus.

2. Description of the Related Art

In order to maintain power grid stability, it is necessary to adjust power demand. When there is a power supply surplus or when the power supply is tight, it is possible to manipulate power demand and maintain the balance between the supply and demand of power by controlling the load apparatuses and power-generation apparatuses installed on the consumer side.

Japanese Patent Application Laid-open No. 2005-168258 can be cited as a technique related to adjusting power demand. Japanese Patent Application Laid-open No. 2005-168258 discloses a technique for reducing the supply voltage of a specific region by either 15% or 55% when there is a power supply shortage in order to avoid a large-scale power outage in the distribution lines of an entire area. According to the prior art disclosed in Japanese Patent Application Laid-open No. 2005-168258, it is possible to curb the power consumption of microwave ovens and most other electrical appliances and machinery, while allowing emergency equipment (emergency lighting, elevators) having boost converters to continue functioning. In addition, according to the prior art disclosed in Japanese Patent Application Laid-open No. 2005-168258, it is also possible to increase the power supply by enabling home-use power generators for emergency use (for example, diesel-powered generators or hybrid vehicles) to detect a drop in voltage and start up.

SUMMARY THE INVENTION

The prior art disclosed in Japanese Patent Application Laid-open No. 2005-168258 is based on the supposition of dealing with a large-scale disaster or other such emergency situation, and does not deal with daily increases and decreases in power demand. Therefore, the prior art disclosed in Japanese Patent Application Laid-open No. 2005-168258 is unable to adjust power demand in accordance with the state of a power supply.

Accordingly, an object of the present invention is to provide a power demand adjustment system and a power demand adjustment method that make it possible to adjust power demand in accordance with the state of a power supply. Another object of the present invention is to provide a power demand adjustment system, a power demand adjustment method, and a power management apparatus for adjusting power demand simply and with high reliability by using an adjustable amount of demand calculated beforehand to create a demand adjustment plan, creating a voltage control plan for realizing the demand adjustment plan, and controlling an output voltage of a voltage control apparatus.

A system for adjusting power demand that accords with one aspect of the present invention for solving the aforementioned problems comprises: voltage control apparatuses for supplying power from a grid to a plurality of consumers; a power management apparatus for controlling an output voltage value of at least one of the voltage control apparatuses; and a demand adjustment plan management apparatus, which is connected to at least one of the power management apparatuses and is for managing a demand adjustment plan for adjusting power demand, wherein the power management apparatus calculates an adjustable amount of demand from the plurality of consumers for enabling power demand to be adjusted, and sends the adjustable amount of demand to the demand adjustment plan management apparatus, the demand adjustment plan management apparatus, on the basis of a request value for an amount of demand adjustment and the adjustable amount of demand received from the power management apparatus, prepares a demand adjustment plan for satisfying the request value for the amount of demand adjustment, and sends the prepared the demand adjustment plan to the power management apparatus, and/or the power management apparatus, on the basis of the demand adjustment plan received from the demand adjustment plan management apparatus, prepares a voltage control plan for controlling the output voltage value of the voltage control apparatus, and causes the output voltage value of the voltage control apparatus to be controlled in accordance with the prepared voltage control plan.

According to the present invention, it is possible to prepare a demand adjustment plan on the basis of an adjustable amount of demand from a plurality of consumers and a request value for a demand adjustment amount, to prepare a voltage control plan based on the demand adjustment plan, and to control an output voltage value of the voltage control apparatus in accordance with the voltage control plan. By controlling the output voltage value of the voltage control apparatus on the basis of the voltage control plan, it is possible to broadly distribute the required amount of demand adjustment among a plurality of consumers, and to adjust the power demand from the plurality of consumers with relative ease.

BRIEF DESCRIPTION THE DRAWINGS

FIG. 1 is a block diagram of an entire power demand adjustment system;
FIG. 2 is a block diagram of a case in which the voltage of a distribution substation is controlled;
FIG. 3 is a block diagram of a case in which the voltage of a pole-mounted transformer is controlled;
FIG. 4 is a block diagram of the hardware of the power demand adjustment system;
FIG. 5 is a schematic diagram illustrating the storage contents of a power management apparatus;
FIG. 6A is a schematic diagram illustrating the storage contents of a demand adjustment plan management apparatus, FIG. 6B is a schematic diagram illustrating the storage contents of a voltage control apparatus, and FIG. 6C is a schematic diagram illustrating the storage contents of a power results collection apparatus;
FIG. 7 is a flowchart illustrating the overall processing of the power demand adjustment system;
FIG. 8 is a flowchart illustrating the processing for calculating the adjustable amount of demand;
FIG. 9A illustrates a block diagram of a demand adjustment contract table retained by a demand adjustment contract storage part, FIG. 9B illustrates a block diagram of a voltage control apparatus table retained by a voltage control apparatus storage part, and FIG. 9C illustrates a block diagram of a meteorological information table retained by a meteorological forecast storage part;
FIG. 10A illustrates a block diagram of a meteorological results table retained by a meteorological results storage part, FIG. 10B illustrates a block diagram of a calendar information table retained by a calendar information storage part, and FIG. 10C illustrates a block diagram of a voltage control plan table retained by a voltage control plan storage part;
FIG. 11A illustrates a block diagram of a demand adjustment results plan table retained by a demand adjustment results storage part, and FIG. 11B illustrates a block diagram of a demand results table retained by the demand adjustment results storage part;
FIG. 12A illustrates a block diagram of a percentage-of-voltage-correlation-apparatuses table retained by a percentage-of-voltage-correlation-apparatuses storage part, FIG. 12B illustrates a block diagram of a power grid information table retained by a power grid information storage part, and FIG. 12C illustrates a block diagram of an adjustable-amount-of-demand table retained by an adjustable-amount-of-demand storage part;
FIG. 13 is a graph for illustrating a percentage of voltage correlation apparatuses;
FIG. 14 is a graph illustrating the relationship between a delivery voltage considered to be a voltage drop and an appropriate voltage;
FIG. 15 is a flowchart illustrating the processing for preparing a demand adjustment plan;
FIG. 16A illustrates a block diagram of a power management apparatus table retained by a power management apparatus storage part, and FIG. 16B illustrates a block diagram of a demand adjustment task table retained by a demand adjustment task storage part;
FIG. 17 is a block diagram of a demand adjustment plan table retained by a demand adjustment plan storage part;
FIG. 18 is a graph illustrating an example of a demand adjustment plan;
FIG. 19 is a flowchart illustrating the processing for preparing a voltage control plan;
FIG. 20 is a graph illustrating an example of a voltage control plan; and
FIG. 21 is a flowchart illustrating the processing for managing a percentage of voltage correlation apparatuses.

DESCRIPTION THE PREFERRED EMBODIMENT

An embodiment of the present invention will be explained below on the basis of the drawings. In the following explanation, consumer signifies an entity or facility that consumes power from the grid. Adjusting the power demand of a consumer signifies adjusting the amount of power that is consumed by the consumer’s facilities (electrical loads). For convenience of explanation, the consumer and the consumer’s facilities may be described without making any distinction therebetween.

In the embodiment, the output voltage value of a voltage control apparatus for supplying power from the grid to a plurality of consumers is controlled in accordance with a voltage control plan. Thus, in the embodiment, the power demand of a plurality of consumers can be adjusted at one time in accordance with single-location voltage control.

For example, reducing the output voltage value of the voltage control apparatus just slightly reduces the amount of power received at each of a plurality of consumers within the area of responsibility of the voltage control apparatus, thereby reducing the total amount of power demand within the area of responsibility. This makes it possible to respond to a request to adjust power demand while operating the facilities at the consumers in a normal state. Power demand may be abridged as demand hereinbelow.

As described above, according to the embodiment, "voltage control under the voltage control apparatus" is used as means for executing demand adjustment. In the embodiment, the demand of each consumer is adjusted at the same time by controlling the supply voltage to a plurality of consumers.

Therefore, according to the embodiment, demand can be adjusted easily without the need to monitor, make predictions about, and control numerous and varied consumer facilities one by one, and initial installation costs are also relatively inexpensive. In addition, according to the embodiment, demand adjustment can be realized with relatively high execution reliability using a power management apparatus managed by a distributor, regional aggregator, or the like. In addition, in the embodiment, it is possible to execute fine-tuned voltage control for a wide range of consumers, thereby enabling a large adjustable amount of demand to be assured and demand adjustment to be performed without reducing the amenities of the consumer. In addition, in the embodiment, as will be described below, it is possible to create a voltage control plan that takes into account demand adjustment start time and/or reset time, thereby enabling demand to be adjusted in a highly stable manner for both the consumer and the grid.

[Example 1]

FIG. 1 is a schematic diagram illustrating the overall configuration of a demand adjustment system related to the embodiment. FIG. 1 illustrates the principal business entities related to the demand adjustment system. The demand adjustment system, for example, can be operated by a plurality of business entities, such as an electricity market 1501, a grid operator 1601, a retailer 1701, a demand adjustment provider 1201, and a distributor or aggregator 1101. Distributor or aggregator 1101 may be abridged as distributor 1101 hereinbelow.

The electricity market 1501 uses an electricity market management apparatus 1502, the grid operator 1601 uses a supply-demand adjustment management apparatus 1602, the retailer 1701 uses a power retail sales management apparatus 1702, the demand adjustment provider 1201 uses a demand adjustment plan management apparatus 1202, and the distributor 1101 uses a power management apparatus 1102. These computer systems 1502, 1602, 1702, 1202, and 1102 are connected so as to be able to communicate in a two-way manner via a communication network 1001 that uses either public or leased lines.

The attributes of the business entities will differ in accordance with the business environment. For example, they may be the grid operator 1601, the retailer 1701, the demand adjustment provider 1201 and the distributor or aggregator 1101. One computer system may combine a plurality of the aforementioned computer systems 1502, 1602, 1702, 1202, and 1102. In addition, one computer system may be configured by interlinking a plurality of computers. In addition, the power management apparatus 1102, for example, may be disposed in the same enclosure as the voltage control apparatus 1302, or may be disposed in the same computer system as that of the demand adjustment plan management apparatus 1202.

In this arrangement, one demand adjustment plan management apparatus 1202 can manage a plurality of power management apparatuses 1102. One power management apparatus 1102 can manage a plurality of voltage control apparatuses 1302. The voltage control effects of one voltage control apparatus 1302 cover a plurality of consumers.

In this example, it is supposed that a demand adjustment provider 1201 and a distributor 1101 have concluded a demand adjustment contract beforehand. In a supply-demand adjustment contract, for example, a calculation interval and a calculation period for an adjustable amount of demand, a calculation method for an adjustable amount of demand, a reservation fee, a utilization fee, and a penalty are agreed upon between the demand adjustment provider 1201 and the distributor 1101.

On the basis of the demand adjustment contract, each distributor 1101 calculates an adjustable amount of demand using the power management apparatus 1102 and declares this amount to the demand adjustment provider 1201.

The demand adjustment provider 1201, on the basis of the declared adjustable amount of demand, either tenders a bid for a product related to power demand reduction from the electricity market 1501, or receives a request for a power demand adjustment from either the grid operator 1601 or the retailer 1701. The demand adjustment provider 1201 uses the demand adjustment plan management apparatus 1202 to register a demand adjustment task based on the product or the adjustment request. The demand adjustment provider 1201 prepares a demand adjustment plan and sends the plan to the power management apparatus 1102 of each distributor 1101 from the demand adjustment plan management apparatus 1202.

The distributor 1101, on the basis of the received demand adjustment plan, uses the power management apparatus 1102 to create a voltage control plan. The power management apparatus 1102 of the distributor 1101 controls the output voltage value of the voltage control apparatus 1302 by sending a control signal that conforms to the voltage control plan to the voltage control apparatus 1302. In addition, the power management apparatus 1102 adjusts the power demand by controlling the output voltage value of the voltage control apparatus 1302 while collecting a variety of power-related information from the grid using the power information collection apparatus 1402. The power information collection apparatus 1402, for example, measures the voltage value, a current value, and a frequency of the grid, and sends this information to the power management apparatus 1102.

FIGS. 2 and 3 illustrate examples of arrangements of the voltage control apparatus 1302. In the example of FIG. 2, the voltage control apparatus 1302 is disposed so as to control the output voltage value of a distribution substation. Alternatively, in the example of FIG. 3, the voltage control apparatus 1302 is disposed so as to control the output voltage value of a pole-mounted transformer.

A plurality of feeders emanates from the distribution substation and a plurality of pole-mounted transformers is connected to each feeder. A plurality of consumers is connected to each pole-mounted transformer. Therefore, controlling the output voltage value of the distribution substation makes it possible to perform voltage control at the source of the so-called transmission system and to simultaneously adjust demand for a large number of consumers over a wide area.

Alternatively, when controlling the output voltage value of a pole-mounted transformer, the demand of the plurality of consumers connected to the pole-mounted transformer is adjusted. Thus, the range capable of being covered by demand adjustment in accordance with controlling the output voltage value of the pole-mounted transformed is narrower than when controlling the output voltage value of the distribution substation, and the adjustable amount of demand is also small. However, demand can be more finely adjusted by controlling the output voltage value of the pole-mounted transformer.

For example, it is assumed that one group of consumers connected to one pole-mounted transformer that is linked to a certain distribution substation is made up of ordinary private homes, and another group of consumers connected to another pole-mounted transformer that is linked to the same distribution substation is made up of public facilities such as hospitals. In this case, when the output voltage value of the distribution substation is reduced, the amount of power received by not only the private homes but also the public facilities is reduced, and as such, when these facilities are not equipped with boosting and/or electric storage equipment, the provision of services at these facilities is likely to be impacted. Alternatively, when the configuration is such that the output voltage value of the one pole-mounted transformer and the output voltage value of the other pole-mounted transformer is each able to be controlled individually, the demand of the group of private homes can be reduced more than the demand of the public facilities. Thus, when the voltage control apparatus 1302 is disposed in the pole-mounted transformer, it is possible to adjust demand in accordance with the characteristic feature of the consumer.

FIG. 4 illustrates the hardware configuration of the demand adjustment system. The communication configuration will be explained first. The power management apparatus 1102 and the demand adjustment plan management apparatus 1202 are connected via the communication network 1001 so as to be able to communicate in a two-way manner. The power management apparatus 1102 and the voltage control apparatus 1302 are communicably connected in a two-way manner via a communication channel 1002. The power management apparatus 1102 and the power information collection apparatus 1402 are communicably connected in a two-way manner via a communication channel 1003. The communication network 1001 and the communication channels 1002 and 1003 may each be configured separately, or the communication network 1001 may also serve as the communication channels 1002 and 1003.

The power management apparatus 1102, on the basis of the demand adjustment contract, calculates the adjustable amount of demand at the voltage control apparatus 1302 based on information such as meteorological information, calendar information, demand results and the like, and sends this adjustable amount of demand to the demand adjustment plan management apparatus 1202. The power management apparatus 1102, on the basis of a demand adjustment plan received from the demand adjustment plan management apparatus 1202, creates and sends a voltage control plan to each voltage control apparatus 1302. The power management apparatus 1102 updates the parameters required to create the voltage control plan based on the difference between the demand adjustment results resulting from voltage control and the voltage control plan.

The power management apparatus 1102, for example, is configured as a computer system comprising a microprocessor (hereinafter central processing unit (CPU)) 2101, an input device 2102, an output device 2103, a communication device 2104, and a storage device 2105. The power management apparatus 1102, for example, can be configured as an information processing apparatus such as a personal computer, a server computer, a handheld computer, or a wearable computer.

The CPU 2101 realizes the functions of the power management apparatus 1102 by executing prescribed computer programs stored in the storage device 2105. The input device 2102 is for a service provider (distributor) operator to input instructions and information into the power management apparatus 1102. The input device 2102, for example, may be a keyboard, a mouse or other such pointing devices, a touch panel, a voice-input device, and/or a device that detects and inputs a line of sight, brain waves or motion. The output device 2103 is for an operator to obtain information from the power management apparatus 1102. The output device 2103, for example, may be a display, a voice synthesis device, and/or a printer. The communication device 2104 is for communicating with another computer system 1202, 1302, and 1402 via the communication network 1001 and/or the communication channels 1002 and 1003. Communications may be either wireless or wired communications. The storage device 2105 is a memory for storing computer programs and data, and, for example, comprises a random access memory (RAM), a hard disk drive, and so forth.

The demand adjustment plan management apparatus 1202, on the basis of the adjustable amount of demand received from each of the power management apparatuses 1102, bids on an electricity market product and/or registers a demand adjustment task. In addition, the demand adjustment plan management apparatus 1202 creates and sends a demand adjustment plan to each of the power management apparatuses 1102 on the basis of the demand adjustment task.

The demand adjustment plan management apparatus 1202, for example, is configured as a computer system comprising a CPU 2201, an input device 2202, an output device 2203, a communication device 2204, and a storage device 2205. The CPU 2201 realizes the functions of the demand adjustment plan management apparatus 1202 by executing prescribed computer programs stored in the storage device 2205. The input device, output device, communications device, and storage device are substantially the same as those described for the power management apparatus 1102, and as such, explanations will be omitted.

The voltage control apparatus 1302 controls the output voltage value on the basis of the voltage control plan received from the power management apparatus 1102. The voltage control apparatus 1302, for example, is configured as a computer system comprising a CPU 2301, an input device 2302, an output device 2303, a communication device 2304, and a storage device 2305. The CPU 2301 realizes a prescribed function by executing a prescribed computer program stored in the storage device 2305, and controls the output voltage value in accordance with the voltage control plan. The input device, output device, communications device, and storage device are substantially the same as those described for the power management apparatus 1102, and as such, explanations will be omitted.

The power information collection apparatus 1402 collects power information regarding power lines under the control of the voltage control apparatus 1302. The collected power information is sent from the power information collection apparatus 1402 to the power management apparatus 1102. The configuration may be such that the collected power information is sent from the power information collection apparatus 1402 to the voltage control apparatus 1302. The power information collection apparatus 1402, for example, is configured as a computer system comprising a CPU 2401, an input device 2402, an output device 2403, a communication device 2404, and a storage device 2405. Prescribed functions are realized, and the collection and sending of power information are performed in accordance with the CPU 2401 executing prescribed programs stored in the storage device 2405. The input device, output device, communications device, and storage device are substantially the same as those described for the power management apparatus 1102, and as such, explanations will be omitted.

Furthermore, the voltage control apparatus 1302 and the power information collection apparatus 1402 do not necessarily have to be configured as apparatuses that are capable of executing computer programs, and may be configured from hardware circuits. Also, the input devices, output devices, communication devices, and storage devices are incorporated in accordance with the purpose of the computer system, and as such may differ from the configurations described for the power management apparatus 1102.

FIG. 5 is a schematic diagram illustrating the content (computer programs and data) stored in the storage device 2105 of the power management apparatus 1102.

The storage device 2105 of the power management apparatus 1102, for example, stores computer programs for realizing an adjustable-amount-of-demand estimation part 2106, an adjustable-amount-of-demand management part 2107, a demand adjustment plan management part 2108, a voltage control plan creation part 2109, a voltage control plan management part 2110, and a percentage-of-voltage-correlation-apparatuses management part 2111.

The adjustable-amount-of-demand estimation part 2106 calculates the adjustable amount of demand at a future time on the basis of the demand adjustment contract. The adjustable-amount-of-demand estimation part 2106, for example, calculates the adjustable amount of demand for each voltage control apparatus 1302 based on information such as the demand adjustment contract, meteorological information, calendar information, and demand results.

The adjustable-amount-of-demand management part 2107 registers the adjustable amount of demand calculated by the adjustable-amount-of-demand estimation part 2106 in an adjustable-amount-of-demand storage part 2122, and, in addition, sends the adjustable amount of demand to the demand adjustment plan management apparatus 1202.

The demand adjustment plan management part 2108 registers the demand adjustment plan received from the demand adjustment plan management apparatus 1202 in a demand adjustment plan storage part 2123.

The voltage control plan creation part 2109 creates a voltage control plan for each voltage control apparatus 1302 on the basis of the demand adjustment plan registered by the demand adjustment plan management part 2108.

The voltage control plan management part 2110 registers the voltage control plan created by the voltage control plan creation part 2109 in a voltage control plan storage part 2117, and sends this voltage control plan to the voltage control apparatus 1302.

The percentage-of-voltage-correlation-apparatuses management part 2111 updates the demand adjustment results received from the power information collection apparatus 1402 and the percentage-of-voltage-correlation-apparatuses storage part 2120 based on differences between voltage control plans.

The storage device 2105 of the power management apparatus 1102, in order to perform demand adjustment by controlling the voltage, stores a demand adjustment contract storage part 2112, a voltage control apparatus storage part 2113, a meteorological forecast storage part 2114, a meteorological results storage part 2115, a calendar information storage part 2116, a voltage control plan storage part 2117, a demand adjustment results storage part 2118, a demand results storage part 2119, a percentage-of-voltage-correlation-apparatuses storage part 2120, a power grid information storage part 2121, an adjustable-amount-of-demand storage part 2122, and a demand adjustment plan storage part 2123. The table configurations for storing these respective storage parts 2112 through 2123 will be described below.

The storage content of the demand adjustment plan management apparatus 1202, the voltage control apparatus 1302, and the power information collection apparatus 1402 will be explained using FIG. 6.

FIG. 6A illustrates the content stored in the storage device 2205 of the demand adjustment plan management apparatus 1202. The storage device 2205, for example, stores computer programs for realizing a demand adjustment task management part 2206, a demand adjustment plan creation part 2207, and a demand adjustment plan management part 2208, and storage parts 2209, 2210, 2211 for storing the data used for preparing the demand adjustment plan.

The demand adjustment task management part 2206 registers a demand adjustment task in the demand adjustment task storage part 2210 on the basis of a bid-tendered product from the electricity market. Also, the demand adjustment task management part 2206, for example, can register a demand adjustment task in the demand adjustment task storage part 2210 on the basis of a demand adjustment request from the supply-demand adjustment management apparatus 1602 of the grid operator.

The demand adjustment plan creation part 2207 creates a demand adjustment plan for each power management apparatus 1102 relative to the demand adjustment task registered by the demand adjustment task management part 2206. That is, either one or a plurality of power management apparatuses 1102 is used to solve for a single demand adjustment task. Therefore, either one or a plurality of demand adjustment plans is associated with a single demand adjustment task.

The demand adjustment plan management part 2208 sends the demand adjustment plan created by the demand adjustment plan creation past 2207 to the power management apparatus 1102.

The power management apparatus storage part 2209 and the demand adjustment task storage part 2210 will be explained below. The demand adjustment plan storage part 2211 is the same as the demand adjustment plan storage part 2123 retained by the power management apparatus 1102. The difference is that whereas the demand adjustment plan storage part 2211 of the demand adjustment plan management apparatus 1202 stores a demand adjustment plan for each target power management apparatus 1102, each power management apparatus 1102 only stores a demand adjustment plan for its own apparatus.

FIG. 6B illustrates the storage content of the storage device 2305 of the voltage control apparatus 1302. The storage device 2305 stores a computer program for realizing the a voltage control part 2306 for controlling the output voltage value on the basis of the voltage control plan received from the power management apparatus 1102. The storage device 2305 can also store the voltage control plan received from the power management apparatus 1102, but the illustration has been omitted in FIG. 6B.

FIG. 6C illustrates the storage content of the storage device 2405 of the power information collection apparatus 1402. The storage device 2405 stores a computer program for realizing a power results management part 2406, and a demand adjustment results storage part 2407 for storing information indicating power demand results. The power information collection apparatus 1402 collects grid power information, and registers this information in the demand adjustment results storage part 2407. In addition, the power information collection apparatus 1402 sends the collected power demand results to the power management apparatus 1102.

The demand adjustment results storage part 2407 is the same as the demand adjustment results storage part 2118 of the power management apparatus 1102. However, since the power management apparatus 1102 acquires and manages power information indicating the power demand results from the power information collection apparatus 1402 corresponding to each voltage control apparatus 1302, the demand adjustment results storage part 2118 stores the demand results from each power information collection apparatus 1402. Alternatively, the power information collection apparatus 1402 only stores the demand results that have been acquired by its own apparatus.

FIG. 7 is a flowchart illustrating the overall operation of the demand adjustment system. Of the following Steps S101 through S109, the power management apparatus 1102 executes Steps S101, S105, S106 and S109. Steps S102 and S103 are executed by the demand adjustment plan management apparatus 1202. Step S107 is executed by the voltage control apparatus 1302. Step S108 is executed by the power information collection apparatus 1402. More specifically, prescribed functions, which are realized in accordance with the computer programs stored in each apparatus being executed by microprocessors, execute the steps illustrated in the flowchart. The description can also be such that the overall system is regarded as the doer of the operations. In this case, for example, the operations can be expressed as "The demand adjustment system estimates the adjustable amount of demand, prepares a demand adjustment plan on the basis of the adjustable amount of demand, prepares a voltage control plan for realizing the demand adjustment plan, and controls the output voltage value of the voltage control apparatus in accordance with this voltage control plan."

In Step S101, the power management apparatus 1102, on the basis of the contents of the demand adjustment contract, extracts a time in the future at which the adjustable amount of demand should be calculated. In addition, the power management apparatus 1102 estimates and calculates for each extracted prediction-target time an adjustable amount of demand based on information such as meteorological information, calendar information, past demand results, and a percentage of voltage correlation apparatuses. The power management apparatus 1102 sends the calculated adjustable amount of demand to the demand adjustment plan management apparatus 1202.

In Step S102, the demand adjustment plan management apparatus 1202, on the basis of the adjustable amount of demand received from the power management apparatus 1102, bids on a product from the electricity market and registers a demand adjustment task. In addition, the demand adjustment plan management apparatus 1202 creates a demand adjustment plan for each power management apparatus 1102 that satisfies the registered demand adjustment task.

In Step S103, the demand adjustment plan management apparatus 1202 determines whether demand adjustment plans that satisfy the demand adjustment task were prepared. When it has been determined that demand adjustment plans that satisfy the demand adjustment task have been prepared, the demand adjustment plan management apparatus 1202 sends the respective demand adjustment plans to the corresponding power management apparatuses 1102. Alternatively, when it has been determined demand adjustment plans satisfying the demand adjustment task could not be prepared (S103: NO), the demand adjustment plan management apparatus 1202 ends the processing.

Steps S105 through S109 described below are implemented for all the voltage control plans (S104).

In Step S105, the power management apparatus 1102, on the basis of the demand adjustment plan received from the demand adjustment plan management apparatus 1202, creates a voltage control plan based on information such as meteorological information, calendar information, past demand results, and a percentage of voltage correlation apparatuses.

In Step S106, the power management apparatus 1102 determines whether the created voltage control plan is an appropriate plan that falls within an acceptable voltage range. A voltage control plan that either exceeds the acceptable voltage upper limit value or falls below the acceptable voltage lower limit value is determined to be inappropriate. When it has been determined that an appropriate voltage control plan could not be prepared (S106: NO), the power management apparatus 1102 returns to Step S102, and notifies the demand adjustment plan management apparatus 1202. Upon receiving the notification, the demand adjustment plan management apparatus 1202 is able to reconsider and revise the demand adjustment plan. When revision is not possible, a demand adjustment plan that satisfies the demand adjustment task cannot be prepared (S103: NO), and as such, the demand adjustment plan management apparatus 1202 notifies either the electricity market or the source of the demand adjustment request to this effect and ends the processing.

For example, the demand adjustment plan management apparatus 1202 once again creates a demand adjustment plan for each of the other power management apparatuses 1102 except the power management apparatus 1102 from which there was a notification to the effect that an appropriate voltage control plan could not be prepared, and sends the demand adjustment plan to each of these power management apparatuses 1102 (S102). When a notification is issued by any of the other power management apparatuses 1102 to the effect that an appropriate voltage control plan could not be prepared, the demand adjustment plan management apparatus 1202 sends a notification to the effect that demand adjustment is not possible to either the electricity market or the source of the demand adjustment request (Step S103: NO), and ends the processing.

When it is possible to prepare an appropriate voltage control plan via which the output voltage value can be controlled within the acceptable voltage range (S106: YES), the voltage control apparatus 1302 controls the output voltage on the basis of the received voltage control plan (S107). The phrase "control the output voltage value" may be abridged to either output voltage control or voltage control.

In Step S108, the power information collection apparatus 1402 collects power information results regarding voltage fluctuations resulting from output voltage control, and sends these results to the power management apparatus 1102.

In Step S109, the power management apparatus 1102 updates the percentage of voltage correlation apparatuses using the voltage control plan and the demand adjustment results.

This processing ends when the execution of all the voltage control plans has ended. When unprocessed voltage control plans exist, the processing returns to Step S105.

FIG. 8 illustrates the operation of the adjustable-amount-of-demand estimation part 2106. The flowchart of FIG. 8 illustrates Step S101 described using FIG. 7 in detail.

The adjustable-amount-of-demand estimation part 2106 estimates for each voltage control apparatus 1302 how much demand adjustment can be assured at a time in the future, and sends this estimate to the demand adjustment plan management apparatus 1202 (S201 through S206).

The adjustable-amount-of-demand estimation part 2106, on the basis of an adjustable-amount-of-demand calculation interval and an adjustable-amount-of-demand calculation period stored in the demand adjustment contract storage part 2112, extracts a time at which an adjustable amount of demand should be calculated. For example, in the demand adjustment contract table of FIG. 9, "T101" is selected using the demand adjustment contract ID "C01" as a key, and when the current time is "2012/08/16 15:55", a time is extracted every 15 minutes over a 48-hour period from "2012/08/16 16:00" to "2012/08/18 16:00" for a total of 192 extracted times.

The adjustable-amount-of-demand estimation part 2106 calculates the adjustable amount of demand at each extracted time. For example, the adjustable amount of demand calculation of S201 at time "2012/08/16 18:00" for voltage control apparatus ID "VCM01" will be explained as one example. Using the voltage control apparatus ID "VCM01" as a key, "T201" is selected from a voltage control apparatus table in the voltage control apparatus storage part 2113 of FIG. 9B.

The adjustable-amount-of-demand estimation part 2106 uses the map mesh ID "M001" and the time "2012/08/16 18:00" in T201 as keys, and selects "T301" from a meteorological forecast table in the meteorological forecast storage part 2114 of the FIG. 9C.

The adjustable-amount-of-demand estimation part 2106 uses the time "2012/08/16 18:00" as a key, and selects "T501" from a calendar information table in the calendar information storage part 2116 of the FIG. 10B.

The adjustable-amount-of-demand estimation part 2106, on the basis of the selected meteorological forecast "T301" and the calendar information "T501", selects from a demand results table in the demand results storage part 2119 of FIG. 11B "T801", which most closely approximates the conditions, and calculates the amount of demand. A linear search, a k-nearest neighbor algorithm, and an approximate nearest neighbor search are used for the approximate data selection algorithm.

The variables and calculation formulas used in the explanations given below are defined here using Table 1 below.

[Table 1]

$\hat{P}$: Power value targeted by demand adjustment

$\tilde{P}$ : Power value at normal times when demand adjustment not implemented

$\Delta P$: Adjusted power value resulting from demand adjustment

$$(\Delta P = \tilde{P} - \hat{P} \ldots \text{ Expression A})$$

$\hat{V}$: Voltage value targeted by demand adjustment

$\tilde{V}$: Voltage value at normal times when demand adjustment not implemented (Feed voltage setting value configured in accordance with summer season, winter season, and in-between periods)

$\Delta V$: Adjusted voltage value resulting from demand adjustment

$$(\Delta P = \tilde{V} - \hat{V} \ldots \text{ Expression B})$$

$k_n$: Percentage of voltage correlation apparatuses $I$: Contracted voltage

Now then, an inverter, an automatic booster, and a direct current-alternating current switching apparatus (PCS) are electrical apparatuses that operate so as to detect a fluctuation in received voltage, and automatically absorb this voltage fluctuation. These electrical apparatuses cannot simply be represented as Ohm's Law (P[w] = I[A] · V[V]) for a power line to which the electrical appliances and machinery thereof is most likely connected.

Accordingly, in this example, the percentage of the electrical appliances and machinery connected to a power line under the control of the voltage control apparatus 1302 accounted for by voltage correlation apparatuses, which change the amount of received power using voltage control, is stored in the percentage-of-voltage-correlation-apparatuses storage part 2120 as a percentage of voltage correlation apparatuses kn.

This satisfies the relational expression P = I · V · kn. The percentage of voltage correlation apparatuses kn is a percentage of electrical appliances and machinery accounted for by voltage correlation apparatuses that change the amount of received power in accordance with controlling voltage, and as such, is influenced by meteorological information, calendar information, and other such items that affect consumer living patterns.

As illustrated in FIG. 13, an adjusted power value ΔP resulting from demand adjustment is expressed here as Expression C: ΔP = I · ΔV · kn.

A target voltage value using demand adjustment can be determined from Expression A and Expression B in Table 1, and the aforementioned Expression C as Formula 1 below.

[Formula 1]

$$\hat{V} = \tilde{V} - \Delta V = \tilde{V} - \frac{\Delta P}{I \cdot k_n} = \tilde{V} - \frac{\tilde{P} - \hat{P}}{I \cdot k_n}$$

The adjustable-amount-of-demand estimation part 2106, on the basis of the selected meteorological forecast "T301" and the calendar information "T501", selects from a percentage-of-voltage-correlation-apparatuses table in the percentage-of-voltage-correlation-apparatuses storage part 2120 of FIG. 12A "T901", which most closely approximates the conditions. A linear search, a k-nearest neighbor algorithm, and an approximate nearest neighbor search are used for the approximate data selection algorithm.

In addition, a voltage drop phenomenon must be taken into account when current is flowing through a power line. A voltage drop value Vd is expressed using the following expression.

Vd (In, Ln) = Ku · In · Ln · Z · 10 - 3 … (Expression D)

In Expression D, Vd represents a voltage drop value, In represents an electrical current, Ln represents a distance (m), Z represents an impedance (Ω/km), and Ku represents a distribution system-based coefficient. "1" is configured in the Ku coefficient in the case of a "single-phase two-wire or single-phase three-wire system with loads connected between voltage lines", "2" is configured in the case of a "single-phase three-wire or three-phase four-wire system with loads connected between voltage line and neutral line", and "3" is configured in the case of a "three-phase three-wire or three-phase four-wire system with loads connected between voltage lines".

The aforementioned Expression D, as illustrated in FIG. 14, indicates that the voltage in the distribution grid gradually drops from the feed voltage, causing the voltage drop coefficient to change in stages in accordance with the amperage consumed by each substation (for example, a pole-mounted transformer).

Appropriate voltage upper limit and lower limit values are established beforehand as the standard voltage at each substation. As an example, under Japan's current Electricity Business Act, the standard voltage for a low-voltage consumer is established as being within 101±6 [V] in a 100 [V] circuit, and within 202±20 [V] in a 200 [V] circuit. For a distribution grid, the articles of agreement of electric power companies stipulate a standard voltage of within 6600±300 [V] for metropolitan areas, and within 6600±600 [V] for other areas. A deviation from the upper limit value and lower limit value of an appropriate voltage calculated based on these standard voltages is a violation of the terms of service, and as such, power must be distributed to consumers within the aforementioned ranges.

The adjustable-amount-of-demand estimation part 2106 selects "T1001" from a power grid information table (FIG. 12B) in the power grid information storage part 2121 using the voltage control apparatus ID "VCM01" as the key for the current value, the distance, the impedance, and the distribution system.

Next, the adjustable-amount-of-demand estimation part 2106, so as to satisfy the standard voltages described hereinabove and illustrated in FIG. 14 based on the selected demand result "T801", percentage of voltage correlation apparatuses "T901", and power grid information "T1001", calculates the upper limit value and lower limit value of a target voltage value by calculating the upper limit value and the lower limit value of the feed voltage based on the aforementioned Formula 1, and calculates the adjustable amount of demand ΔP based on Formula 2 below (S204). A case in which the adjustable amount of demand ΔP is a plus value indicates that the amount of received power can be reduced. A case in which the adjustable amount of demand ΔP is a minus value indicates that the amount of received power can be increased. The adjustable-amount-of-demand estimation part 2106 tabulates the adjustable amount of demand ΔP for each calculation period (S205).

[Formula 2]

$$P = \left(\tilde{V} - \hat{V}\right) \cdot I_n$$

For example, an adjustable amount of demand of "+100 [kW]" is calculated when a voltage of "+100 [V]" can be adjusted, and the current In is "1000 [A]".

The adjustable-amount-of-demand estimation part 2106 uses the calculated adjustable amount of demand to calculate a reservation fee and a utilization fee. The calculation method, for example, uses a value obtained by multiplying a reservation fee unit price by the amount of a demand adjustment for the reservation fee, and for the utilization fee, uses a value obtained by multiplying a utilization fee unit price by an amount of demand adjustment calculated using a baseline determined in accordance with the demand adjustment contract and an amount of demand adjustment calculation formula.

For example, based on demand adjustment plan "T101", a reservation fee of "10,000 x 100 = ¥1,000,000", and a maximum utilization fee of "20,000 x 100 = ¥2,000,000" are calculated.

Actually, it is assumed here that a variety of plans resulting from the demand adjustment contract exist for the reservation fee and the utilization fee, and it is conceivable that a unit price is set so as to increase when a flat-rate system or a certain fixed reference amount is exceeded, or that the respective unit prices are set in accordance with whether the adjustable amount of demand is a plus value or a minus value.

Lastly, the adjustable-amount-of-demand estimation part 2106 sends the adjustable amount of demand to the demand adjustment plan management apparatus 1202 (S206).

The configurations of the tables stored in the storage parts will be explained by referring to FIGS. 9 through 12. FIG. 9A is an example of the demand adjustment contract table that is stored in the demand adjustment contract storage part 2112. The demand adjustment contract table, for example, manages in an associated manner a contract ID, a management apparatus ID, a baseline, a calculation formula, a calculation interval, a calculation period, a reservation unit cost, a utilization unit cost, and a penalty. The contract ID is information for identifying a demand adjustment contract. The management apparatus ID is information for identifying a demand adjustment plan management apparatus 1202. The baseline is a demand adjustment criterion. The calculation formula is a formula for calculating an amount of demand adjustment. The calculation interval is an interval of time for calculating the adjustable amount of demand. The time period is a period of time for calculating the adjustable amount of demand. The reservation unit cost is the reservation fee unit cost. The utilization unit cost is the utilization fee unit cost. The penalty is content for when the contract has been violated.

FIG. 9B illustrates an example of the voltage control apparatus table that is stored in the voltage control apparatus storage part 2113. The voltage control apparatus table, for example, manages in an associated manner a voltage control apparatus ID, a map mesh ID, and a voltage control method. The voltage control apparatus ID is information for identifying a voltage control apparatus 1302. The map mesh ID is information for identifying an area on a map that includes the location where the voltage control apparatus 1302 is installed. The voltage control method indicates the method used by the voltage control apparatus 1302 to control the output voltage. The voltage control method may be a method that changes the output voltage in a substantially continuous manner, or a method that changes the output voltage in a discrete manner.

FIG. 9C is an example of the meteorological forecast table that is stored in the meteorological forecast storage part 2114. The meteorological forecast table, for example, manages in an associated manner a meteorological information ID, a map mesh ID, weather, a temperature, solar radiation, humidity, a wind direction, a wind speed, and a date/time. The meteorological information ID is information for identifying a meteorological information record. The map mesh ID is information for identifying an area on a map where the region from which the meteorological information was acquired is located.

FIG. 10A is an example of the meteorological results table that is stored in the meteorological results storage part 2115. The meteorological results table stores actual meteorological information, and has the same configuration as that of the meteorological forecast table. Demand for a prediction-target period can be estimated more accurately by taking into account a meteorological forecast and meteorological results.

FIG. 10B illustrates an example of the calendar information table that is stored in the calendar information storage part 2116. The calendar information table, for example, manages in an associated manner a calendar information ID, a date, a day of the week, and a classification. The calendar information ID is information for identifying a calendar information record. The classification, for example, indicates a category, such as workday, non-workday, or holiday.

FIG. 10C illustrates an example of the voltage control plan table that is stored in the voltage control plan storage part 2117. The voltage control plan table, for example, manages in an associated manner a voltage control plan ID, a voltage control apparatus ID, a voltage target value, a control start time, a target-voltage-reached time, a reset control start time, and a standard-voltage-reached time.

The voltage control plan ID is information for identifying a voltage control plan. The voltage control apparatus ID is information for identifying a voltage control apparatus 1302 that is taking part in the voltage control plan. The voltage target value is a value that serves as the target for the output voltage control by the voltage control apparatus 1302. The control start time is the time at which the control for demand adjustment (output voltage control) starts. The target-voltage-reached time is the time at which the output voltage value reaches the voltage value being targeted. The reset control start time is the time at which the control for demand adjustment ends. The standard-voltage-reached time is the time at which the voltage value of the power line (the output voltage value of the voltage control apparatus 1302) resets to the pre-demand adjustment standard voltage.

FIG. 11A is an example of the demand adjustment results table that is stored in the demand adjustment results storage part 2118. The demand adjustment results table, for example, manages in an associated manner a demand adjustment results ID, a pre-adjustment amount of demand, a post-adjustment amount of demand, an amount of demand adjustment, a voltage result, a voltage control plan ID, a demand adjustment start time, and a demand adjustment end time.

The demand adjustment results ID is information for identifying demand adjustment results information. The pre-adjustment amount of demand is the amount of power demand prior to demand adjustment being performed. The post-adjustment amount of demand is the amount of demand subsequent to demand adjustment being performed. The voltage result is the voltage value when the output voltage has been controlled. The voltage control plan ID is information for identifying a voltage control plan that has been implemented in accordance with the demand adjustment plan. The demand adjustment start time is the time at which demand adjustment started. The demand adjustment end time is the time at which the demand adjustment ended.

FIG. 11B illustrates an example of the demand results table that is stored in the demand results storage part 2119. The demand results table, for example, manages in an associated manner a demand adjustment results ID, a voltage control apparatus ID, a meteorological information ID, a calendar information ID, a demand amount, a measurement start time, and a measurement end time. The demand adjustment results ID is information for identifying demand adjustment results information registered in the demand adjustment results table (FIG. 9A). The voltage control apparatus ID is information for identifying a voltage control apparatus 1302. The meteorological information ID is meteorological forecast information registered in the meteorological forecast table (FIG. 9C), and/or information for identifying meteorological results information registered in the meteorological results table (FIG. 10A). The calendar information ID is information for identifying calendar information registered in the calendar information table (FIG. 10B). The demand amount is the amount of demand at demand adjustment. The measurement start time indicates the time at which the results of the demand adjustment started to be measured. The measurement end time indicates the time at which this measurement ended.

FIG. 12A illustrates an example of the percentage-of-voltage-correlation-apparatuses table that is stored in the percentage-of-voltage-correlation-apparatuses storage part 2120. The percentage-of-voltage-correlation-apparatuses table, for example, manages in an associated manner a percentage of voltage correlation apparatuses ID, a voltage control apparatus ID, weather, holidays, a time, a temperature, and a percentage of voltage correlation apparatuses (kn).

The percentage of voltage correlation apparatuses ID is information for identifying percentage of voltage correlation apparatuses information. The voltage control apparatus ID is information for identifying a voltage control apparatus 1302. The percentage of voltage correlation apparatuses, as described hereinabove, is the percentage of electrical appliances and machinery of each consumer connected to the voltage control apparatus 1302 accounted for by voltage correlation apparatuses via which demand (amount of power consumed) changes in accordance with changing received voltage.

FIG. 12B illustrates an example of the power grid information table that is stored in the power grid information storage part 2121. The power grid information table, for example, manages in an associated manner a voltage control apparatus ID, an electric current, a distance, an impedance, a distribution system, and an acceptable grid voltage fluctuation.

The voltage control apparatus ID is information identifying a voltage control apparatus 1302. The electric current is a current value outputted from the voltage control apparatus 1302. The distance is the length of the power line emanating from the voltage control apparatus 1302. The impedance is percent impedance (%Z). The distribution system is a system for supplying power to a consumer from the voltage control apparatus 1302. The acceptable grid voltage fluctuation is an acceptable value for a voltage fluctuation in a power line.

FIG. 12C illustrates an example of the adjustable-amount-of-demand table that is stored in the adjustable-amount-of-demand storage part 2122. The adjustable-amount-of-demand table, for example, manages in an associated manner an adjustable amount of demand ID, a voltage control apparatus ID, an adjustable amount of demand, a demand adjustment start time, and a demand adjustment end time. The adjustable amount of demand ID is information for identifying a record of the adjustable-amount-of-demand table. The voltage control apparatus ID is information for identifying a voltage control apparatus 1302. The adjustable amount of demand is an amount of power demand that is capable of being adjusted for all the consumers under voltage control apparatus control. The demand adjustment start time is the time at which demand adjustment starts. The demand adjustment end time is the time at which the demand adjustment ends.

FIG. 17 is an example of the demand adjustment plan table that is stored in the demand adjustment plan storage part 2123. The demand adjustment plan table, for example, manages in an associated manner a demand adjustment plan ID, a demand adjustment task ID, a power management apparatus ID, a demand-adjustment-request amount, a demand adjustment start time, a demand adjustment end time, a pre-instruction start time, and a post-instruction end time.

The demand adjustment plan ID is information for identifying a record (demand adjustment information) of the demand adjustment plan table. The demand adjustment task ID is information for identifying a demand adjustment task. The power management apparatus ID is information for identifying a power management apparatus 1102. The demand-adjustment-request amount is the amount of demand adjustment that should be reached by the group of consumers for which the power management apparatus 1102 is in charge. The demand adjustment start time is the time at which a demand adjustment starts. The demand adjustment end time is the time at which the demand adjustment ends. The pre-instruction start time and the post-instruction end time will be explained below.

The processing for creating a demand adjustment plan will be explained by using FIG. 15. The flowchart of FIG. 15 is Step S102 described using FIG. 7 in detail.

The demand adjustment plan management apparatus 1202 receives an adjustable amount of demand, a reservation fee and a utilization fee sent from each power management apparatus 1102 (S301). The demand adjustment plan management apparatus 1202, on the basis of the information received from the power management apparatus 1102, either tenders a bid for a product from the electricity market 1501 or receives a demand adjustment request from a demand-adjustment-request source such as a grid operator, and registers a demand adjustment task in the demand adjustment task storage part 2210 (S302).

The demand adjustment plan management apparatus 1202, for each power management apparatus (S303), creates a demand adjustment plan using the demand adjustment task and the adjustable amount of demand (S304).

This processing will be explained in more detail. The demand adjustment plan management apparatus 1202, on the basis of the demand adjustment contract, receives an adjustable amount of demand from each power management apparatus 1102 (S301). For example, the demand adjustment plan management apparatus 1202 receives the adjustable amount of demand for the period from time "2012/08/16 18:00" to time "2012/08/18 18:00". Based on these adjustable amounts of demand, and the reservation fees and utilization fees, the demand adjustment plan management apparatus 1202 determines whether or not to tender a bid for a product from the electricity market 1501, or to receive a demand adjustment request from the demand-adjustment-request source. For example, in a case where it has been determined that, during the period from time "2012/08/16 18:00" to time "2012/08/16 20:00", an amount of demand adjustment of "+10000 kw" can be assured and a profit can be made, and a bid has been tendered for a product with an amount of demand adjustment of "+10000 kw", a pre-instruction start time of "2012/08/16 16:30", and a post-instruction end time of "2012/08/16 21:30", the demand adjustment task is registered as "T1201" in the demand adjustment task table in the demand adjustment task storage part (S302).

Next, the demand adjustment plan management apparatus 1202 partitions an amount of demand adjustment for each power management apparatus 1102 from the registered demand adjustment task and determines a demand-adjustment-request amount. For example, the demand adjustment plan management apparatus 1202 finds a solution to the knapsack problem that is targeted at satisfying the amount of demand adjustment in the demand adjustment task, and, in addition, holding the reservation fees and utilization fees to the minimum. This enables the creation of a demand adjustment plan that makes it possible to maximize the profits of the service provider (demand adjustment provider) 1201.

In addition to minimizing the reservation fees and utilization fees, for example, the target set at this point can also include minimizing carbon dioxide emissions, and/or maximizing the reliability of demand adjustment implementation. The method for calculating a demand-adjustment-request amount for each power management apparatus 1102 may make use of a solution other than that for the knapsack problem.

By solving for the knapsack problem, the demand adjustment plan management apparatus 1202, for example, configures a demand-adjustment-request amount that achieves a demand adjustment of "-1000 [kw]" for the power management apparatus 1102 during the period from time "2012/08/16 18:00" to time "2012/08/16 20:00".

The demand adjustment plan management apparatus 1202 creates a demand adjustment plan based on the demand-adjustment-request amount for each power management apparatus 1102 (S304). In addition to the demand adjustment start time and the demand adjustment end time, the pre-instruction start time and the post-instruction end time can be included as restrictive conditions when creating the demand adjustment plan.

A pre-instruction period is an acceptable period of time from the start of a demand adjustment until the amount of demand adjustment reaches the demand-adjustment-request amount. In this example, this start time is called the pre-instruction start time (Refer to FIG. 20). When the amount of demand adjustment does not reach the demand-adjustment-request amount within this pre-instruction period, a penalty is generated on the basis of the demand adjustment contract.

Similarly, a post-instruction period is an acceptable period of time from the end of the demand adjustment period until the amount of demand can be reset to normal, and in this example, the end time therefor is called the post-instruction time (Refer to FIG. 20).

In other words, the period of time during which the change is made from the standard voltage value to the target voltage value at the start of the demand adjustment is the pre-instruction period, and the period of time during which the target voltage value is reset to the standard voltage value subsequent to the end of the demand adjustment is the post-instruction period.

When an adjustment to power demand is provided to the electricity market 1501 as a power-related product, in addition to achieving the demand-adjustment-request amount, it is also necessary to achieve a demand-adjustment-request amount with the highest possible reliability. Accordingly, in this example, a pre-instruction start time and a post-instruction end time are configured when it is necessary to enhance merchantability to create a demand adjustment plan that satisfies these requirements.

The demand adjustment plan management apparatus 1202, for example, includes the pre-instruction start time and the post-instruction end time described hereinabove, and registers the demand adjustment plan as "T1401" in the demand adjustment plan table of the demand adjustment plan storage part 2123 (Refer to FIG. 17).

FIG. 18 illustrates the demand adjustment plan indicated by "T1401" as a graph. The amount of power received before adjustment (standard voltage value) Pbefore drops to the amount of power received after adjustment Pafter, which is the target voltage value, subsequent to the passage of the pre-instruction period.

The processing of the voltage control plan creation part 2109 will be explained in detail using FIGS. 19 and 20. The flowchart of FIG. 19 illustrates the details of Steps S105 and S106 described using FIG. 7. The power management apparatus 1102, upon receiving the demand adjustment plan from the demand adjustment plan management apparatus 1202 (S401), creates a voltage control plan based on the demand adjustment plan for each voltage control apparatus 1302 (S402, S403).

First, the power management apparatus 1102 uses the received demand adjustment plan to allocate a demand-adjustment-request amount to each voltage control apparatus 1302 so as to satisfy the demand-adjustment-request amount.

The power management apparatus 1102 applies the latest percentage of voltage correlation apparatuses, the power value at normal times, and the voltage value at normal times (the voltage value at normal times when prior to the execution of the voltage control plan, and the current voltage when execution is in progress) to Formula 1, and calculates a voltage target value in each voltage control apparatus 1302.

The voltage target value here must satisfy appropriate voltage restrictions taking into account the voltage drop phenomenon as described in the adjustable-amount-of-demand estimation process illustrated in FIG. 8, and, in addition, must satisfy the appropriate voltage restrictions of the voltage control apparatus itself. Therefore, for example, calculations are carried out using Formula 3 below.

[Formula 3]

$$\hat{V} = 6600[V] - \frac{1000[kw] - 970[kw]}{500[A] \times 0.60} = 6500[V]$$

The power management apparatus 1102 creates a voltage control plan that satisfies the voltage target value for each voltage control apparatus 1302 (S403). The voltage control plan can be prepared at this time so as to satisfy the restrictions of the pre-instruction period and the post-instruction period. In addition, it is preferable that the plan be one that satisfies an acceptable grid voltage fluctuation (an acceptable range for voltage fluctuations per unit of time that makes it possible to assure grid safety) to prevent the deterioration of the power grid, and to prevent the occurrence of reverse power flows and power outages.

FIG. 20 illustrates the voltage control plan indicated by "T601" in FIG. 10C in the form of a graph. The power management apparatus 1102 creates a voltage control plan that satisfies all of the various restrictive conditions, that is, a plan that is able to realize the demand-adjustment-request amount in the pre-instruction period, that falls within acceptable grid voltage fluctuations, and, in addition, that satisfies the appropriate voltage restrictions (S403).

Depending on the type of voltage control apparatus 1302, there are apparatuses that can change the voltage using a continuous value, and there are apparatuses that can only change the voltage using a discrete value. Accordingly, the power management apparatus 1102 selects a voltage control method from the voltage control apparatus table illustrated in FIG. 9B. A voltage control apparatus 1302 that is able to select any of a plurality of voltage control methods may be used.

When any of the aforementioned restrictive conditions is not satisfied (S404: NO), the power management apparatus 1102 sends a signal to the demand adjustment plan management apparatus 1202 to the effect that a demand adjustment cannot be executed, creates enough demand adjustment plans to make demand adjustment possible, and moves the processing to Step S303 on FIG. 15 (Step S102 of FIG. 7) .

When the power management apparatus 1102 was able to prepare a voltage control plan that satisfies all of the prescribed restrictive conditions (S404: YES), this apparatus 1102 sends the voltage control plan to each of the voltage control apparatuses 1302 (S405) and ends the processing.

The processing for managing the percentage of voltage correlation apparatuses will be explained using FIG. 21. When, as a result of having performed output voltage control on the basis of the created voltage control plan, the demand adjustment results for a certain time do not coincide with the demand adjustment plan, the power management apparatus 1102 updates the percentage of voltage correlation apparatuses in the percentage-of-voltage-correlation-apparatuses table for that time.

Upon receiving demand adjustment results information from the power information collection apparatus 1402 (S501), the power management apparatus 1102 stores the demand adjustment results information in the demand adjustment results storage part 2118, and, in addition, reads the voltage control plan from the voltage control plan storage part 2117, and compares the demand adjustment results information to the voltage control plan (S502).

When the rate of agreement between the results and the plan is equal to or less than a prescribed value, the power management apparatus 1102 recalculates and updates the percentage of voltage correlation apparatuses based on the demand adjustment results information and the voltage control plan (S502). For example, when the demand adjustment results obtained using a voltage control plan created having a percentage of voltage correlation apparatuses of 60% is around 90 percent of the demand-adjustment-request amount, the power management apparatus 1102 updates the percentage of voltage correlation apparatuses that was used to 60% x 0.9 = 54%.

According to the example, which is configured in this manner, controlling the output voltage value of the voltage control apparatus 1302 that supplies power to a plurality of consumers makes it possible to adjust the power demand for this plurality of consumers at one time. Therefore, according to the example, power demand can be adjusted effectively using a relatively simple control configuration without the need to monitor and control the state of the facilities of each consumer individually.

In the example, it is possible to adjust demand by distributing the adjustment among a plurality of consumers in a relatively widespread manner without forcing a demand adjustment on a specific consumer. Therefore, each consumer's facilities (electrical appliances and machinery) can operate substantially as usual, and power demand can be adjusted without loss of amenities.

In the example, an adjustable amount of demand is estimated and a voltage control plan is prepared by changing the output voltage value of the voltage control apparatus 1302 by taking into account the percentage of electrical appliances and machinery accounted for by voltage correlation apparatuses that change the amount of power received. Therefore, power demand can be adjusted relatively accurately even when consumers have electrical appliances and machinery that include booster circuits and the like.

In the example, the output voltage value is made to change in stages (also includes cases in which the output voltage value is made to change continuously) before the demand adjustment period and after the demand adjustment period. Therefore, demand can be adjusted by smoothly controlling the output voltage.

The present invention is not limited to the example described hereinabove. A person with ordinary skill in the art will be able to make various additions and changes without departing from the scope of the present invention.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A power demand adjustment system for adjusting power demand, comprising:

voltage control apparatuses (1302) for supplying power from a grid to a plurality of consumers;
a power management apparatus (1102) for controlling an output voltage value of at least one of the voltage control apparatuses (1302); and
a demand adjustment plan management apparatus (1202), which is connected to at least one of the power management apparatuses (1102) and is for managing a demand adjustment plan for adjusting power demand,
wherein the power management apparatus (1102) calculates an adjustable amount of demand from the plurality of consumers for enabling power demand to be adjusted, and sends the adjustable amount of demand to the demand adjustment plan management apparatus (1202),
the demand adjustment plan management apparatus (1202), on the basis of a request value for an amount of demand adjustment and the adjustable amount of demand received from the power management apparatus (1102), prepares a demand adjustment plan for satisfying the request value for the amount of demand adjustment, and sends the prepared the demand adjustment plan to the power management apparatus (1102), and
the power management apparatus (1102), on the basis of the demand adjustment plan received from the demand adjustment plan management apparatus (1202), prepares a voltage control plan for controlling the output voltage value of the voltage control apparatus (1302), and causes the output voltage value of the voltage control apparatus (1302) to be controlled in accordance with the prepared voltage control plan.

**2.** A power demand adjustment system according to claim 1, wherein the power management apparatus (1102) manages a past demand result and a percentage of voltage correlation apparatuses indicating a percentage, from among appliances and machinery that receive power from the voltage control apparatus, of appliances and machinery in which the amount of received power changes by controlling the output voltage value of the voltage control apparatus (1302), and
calculates the adjustable amount of demand on the basis of the demand result and the percentage of voltage correlation apparatuses.

**3.** A power demand adjustment system according to claim 2, wherein the power management apparatus (1102) prepares the voltage control plan on the basis of the percentage of voltage correlation apparatuses, the demand result, and the demand adjustment plan.

**4.** A power demand adjustment system according to claim 2 or 3, wherein the power management apparatus (1102) manages a demand adjustment result indicating a result of demand adjustment when the voltage control plan has been implemented, and calculates and updates the percentage of voltage correlation apparatuses by comparing the voltage control plan with the demand adjustment result.

**5.** A power demand adjustment system according to claim 2 or 3 or 4, wherein the voltage control plan, in accordance with a demand adjustment period indicated in the demand adjustment plan, reduces the output voltage value of the voltage control apparatus (1302) to a target voltage value that is configured between an upper limit value and a lower limit value of an acceptable grid voltage.

**6.** A power demand adjustment system according to claim 5, wherein the voltage control plan reduces the output voltage value of the voltage control apparatus (1302) from a standard voltage value to the target voltage value in a prescribed period before the start of the demand adjustment period.

**7.** A power demand adjustment system according to claim 5 or 6, wherein the voltage control plan increases the output voltage value of the voltage control apparatus (1302) from the target voltage value to the standard voltage value in a prescribed period after the end of the demand adjustment period.

**8.** A power demand adjustment system according to any one of claims 1 through 6, wherein the power management apparatus (1102), upon having determined that it is not possible to prepare a voltage control plan that satisfies the demand adjustment plan, reports to the demand adjustment plan management apparatus (1202) to this effect.

**9.** A power demand adjustment system according to any one of claims 1 through 8, wherein the voltage control apparatus (1302) controls the output voltage value of a pole-mounted transformer.

**10.** A power demand adjustment system according to any one of claims 1 through 8, wherein the voltage control apparatus (1302) controls the output voltage value of a distribution substation.

**11.** A power adjustment method for adjusting power demand in a power demand adjustment system that includes:

voltage control apparatuses (1302) for supplying power from a grid to a plurality of consumers; a power management apparatus (1102) for controlling an output voltage value of at least one of the voltage control apparatuses (1302); and a demand adjustment plan management apparatus (1202), which is connected to at least one of the power management apparatuses (1102) and manages a demand adjustment plan for adjusting power demand,
the power demand adjustment method comprising:

operating the power management apparatus (1102) to calculate an adjustable amount of demand for enabling power demand from the plurality of consumers to be adjusted, and send the adjustable amount of demand to the demand adjustment plan management apparatus (1202);
operating the demand adjustment plan management apparatus (1202), on the basis of a request value for an amount of demand adjustment and the adjustable amount of demand received from the power management apparatus (1102), to prepare a demand adjustment plan for satisfying the request value for the amount of demand adjustment, and send the prepared demand adjustment plan to the power management apparatus (1102); and
operating the power management apparatus (1102), on the basis of the demand adjustment plan received from the demand adjustment plan management apparatus (1202), to prepare a voltage control plan for controlling the output voltage value of the voltage control apparatus (1302), and cause the output voltage value of the voltage control apparatus (1302) to be controlled in accordance with the prepared voltage control plan.

**12.** A power management apparatus (1102) that is used in a system for adjusting a power demand, wherein
the power management apparatus (1102):

is connected to a voltage control apparatus (1302) supplying power from a grid to a plurality of consumers;
calculates an adjustable amount of demand for enabling the power demand from the plurality of consumers to be adjusted;
acquires a demand adjustment plan for satisfying a request value for an amount of demand adjustment, the demand adjustment plan having been prepared on the basis of the request value for the amount of demand adjustment and the adjustable amount of demand;
prepares, on the basis of the demand adjustment plan, a voltage control plan for controlling the output voltage value of the voltage control apparatus (1302); and
causes the output voltage value of the voltage control apparatus (1302) to be controlled in accordance with the prepared voltage control plan.

【Fig. 1】

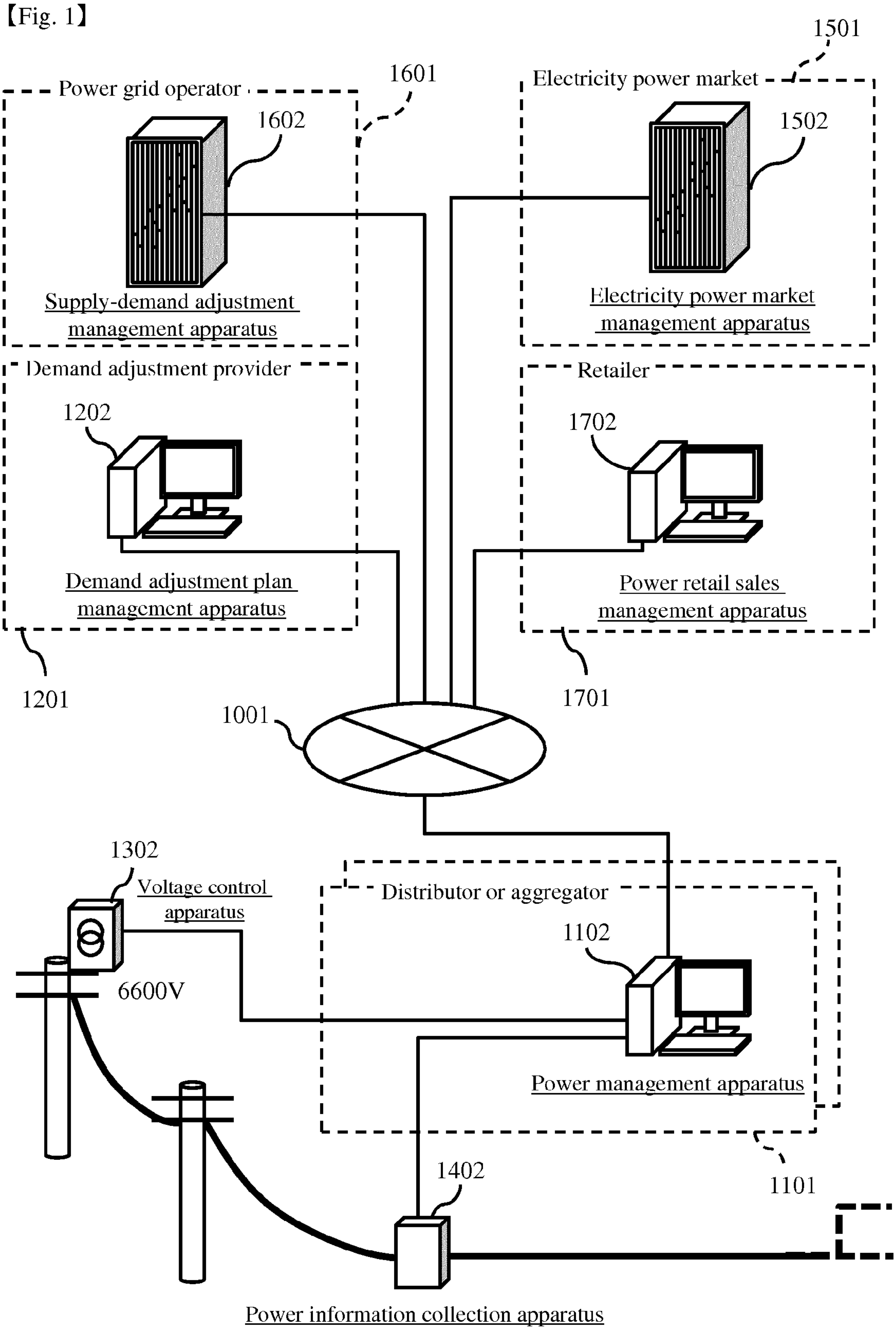
1501
1601
Power grid operator
1602
Supply-demand adjustment management apparatus
Electricity power market
1502
Electricity power market management apparatus
Demand adjustment provider
1202
Demand adjustment plan management apparatus
Retailer
1702
Power retail sales management apparatus
1201
1701
1001
1302
Voltage control apparatus
6600V
Distributor or aggregator
1102
Power management apparatus
1101
1402
Power information collection apparatus

【Fig. 2】

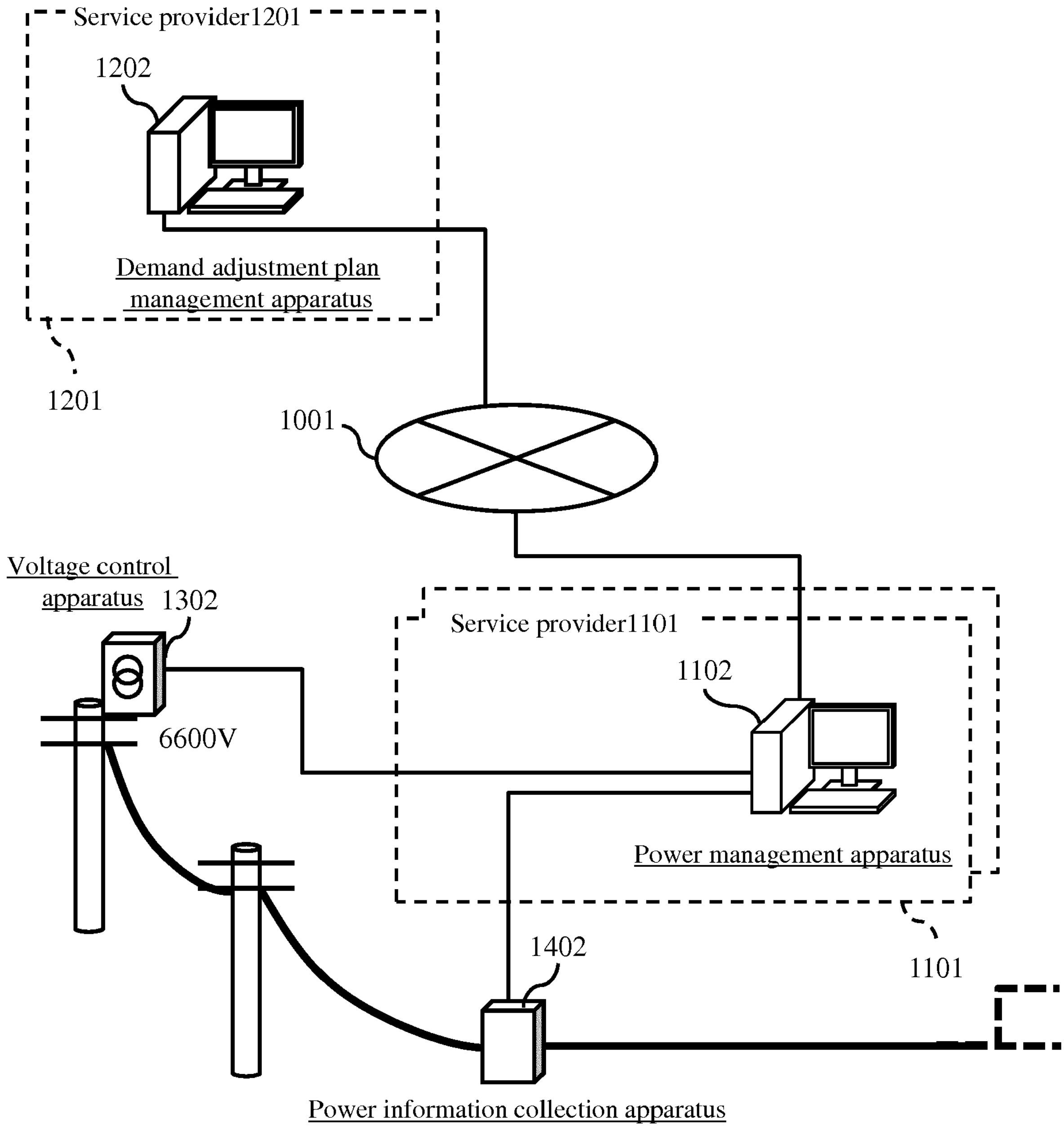
Service provider1201
1202
Demand adjustment plan management apparatus
1201
1001
Voltage control apparatus
1302
6600V
Service provider1101
1102
Power management apparatus
1101
1402
Power information collection apparatus

【Fig. 3】

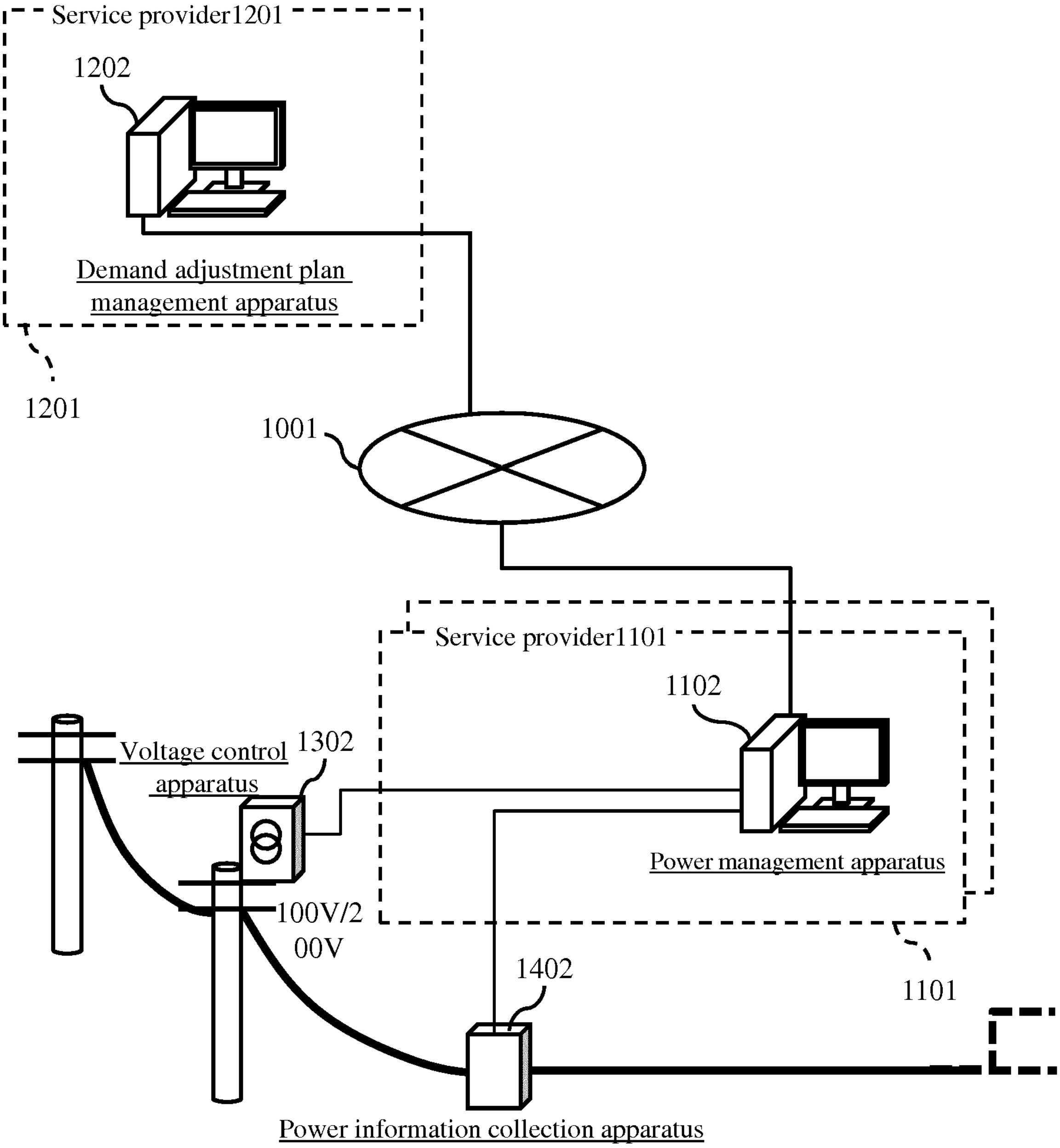
Service provider1201
1202
Demand adjustment plan management apparatus
1201
1001
Service provider1101
1102
Power management apparatus
1101
Voltage control apparatus
1302
100V/200V
1402
Power information collection apparatus

【Fig. 4】

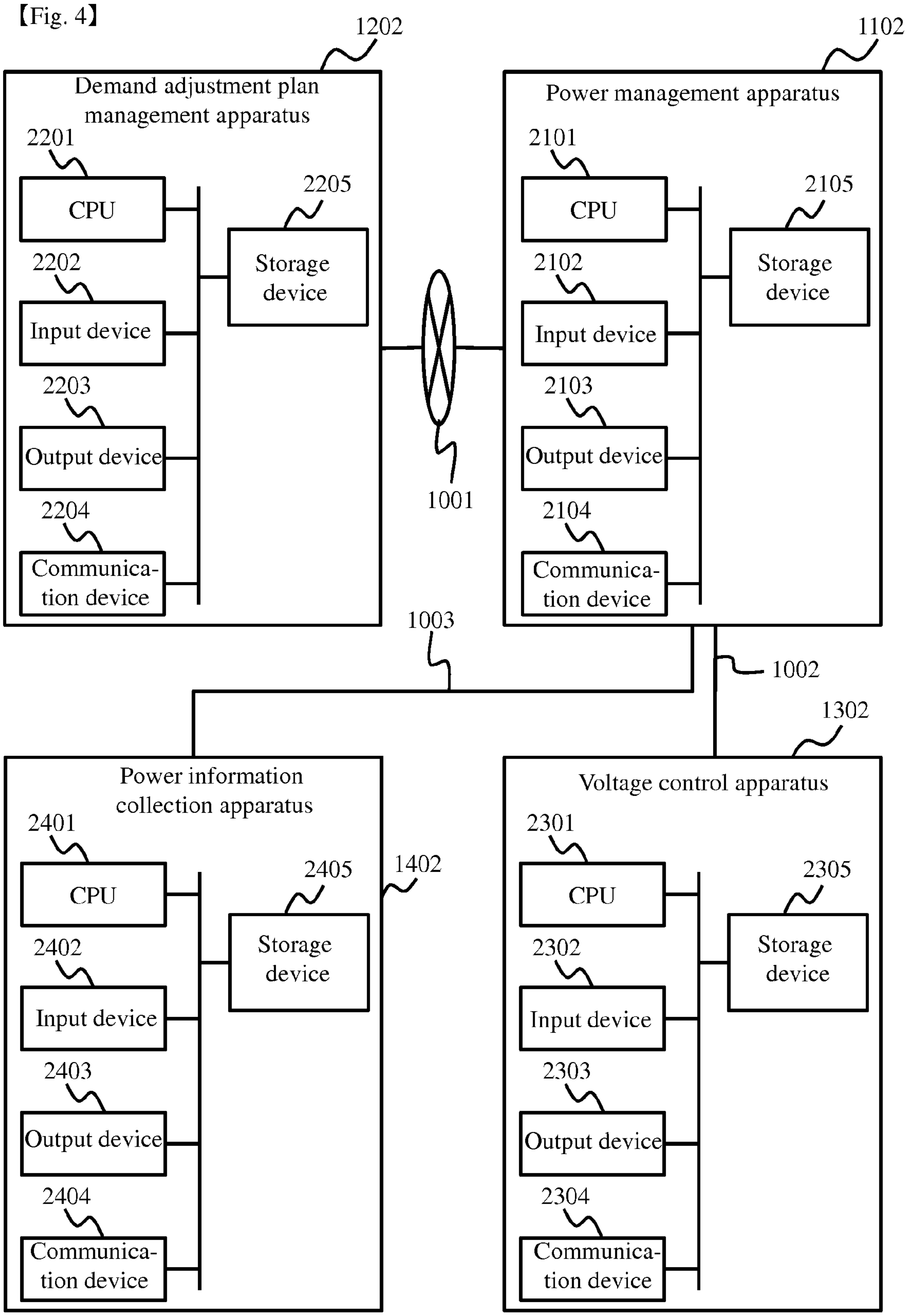
1202
Demand adjustment plan management apparatus
2201
CPU
2205
Storage device
2202
Input device
2203
Output device
2204
Communication device
1102
Power management apparatus
2101
CPU
2105
Storage device
2102
Input device
2103
Output device
2104
Communication device
1001
1003
1002
1302
Power information collection apparatus
2401
CPU
2405
Storage device
2402
Input device
2403
Output device
2404
Communication device
1402
Voltage control apparatus
2301
CPU
2305
Storage device
2302
Input device
2303
Output device
2304
Communication device

【Fig. 5】

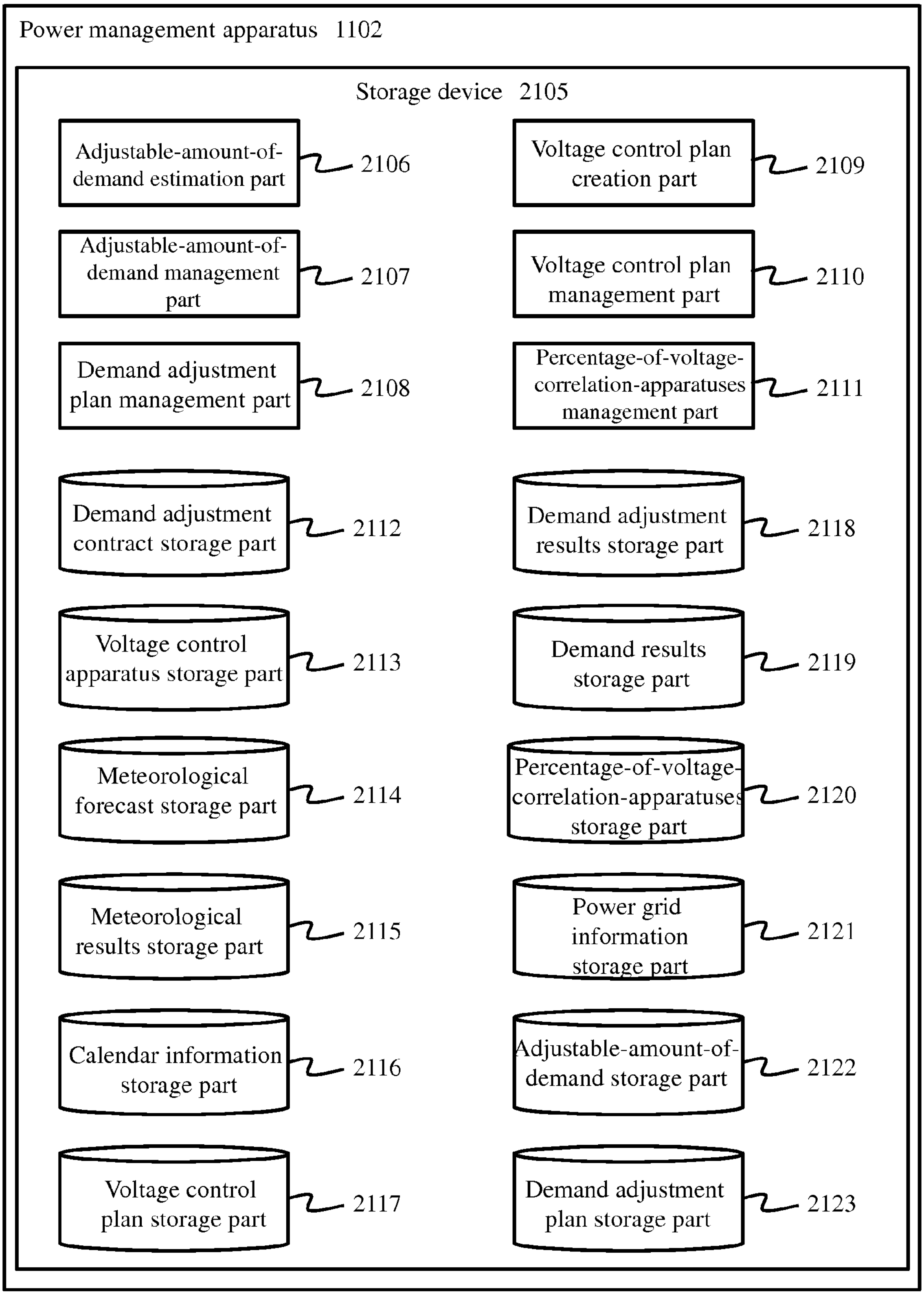
Power management apparatus 1102
Storage device 2105
Adjustable-amount-of-demand estimation part
2106
Voltage control plan creation part
2109
Adjustable-amount-of-demand management part
2107
Voltage control plan management part
2110
Demand adjustment plan management part
2108
Percentage-of-voltage-correlation-apparatuses management part
2111
Demand adjustment contract storage part
2112
Demand adjustment results storage part
2118
Voltage control apparatus storage part
2113
Demand results storage part
2119
Meteorological forecast storage part
2114
Percentage-of-voltage-correlation-apparatuses storage part
2120
Meteorological results storage part
2115
Power grid information storage part
2121
Calendar information storage part
2116
Adjustable-amount-of-demand storage part
2122
Voltage control plan storage part
2117
Demand adjustment plan storage part
2123

【Fig. 6】

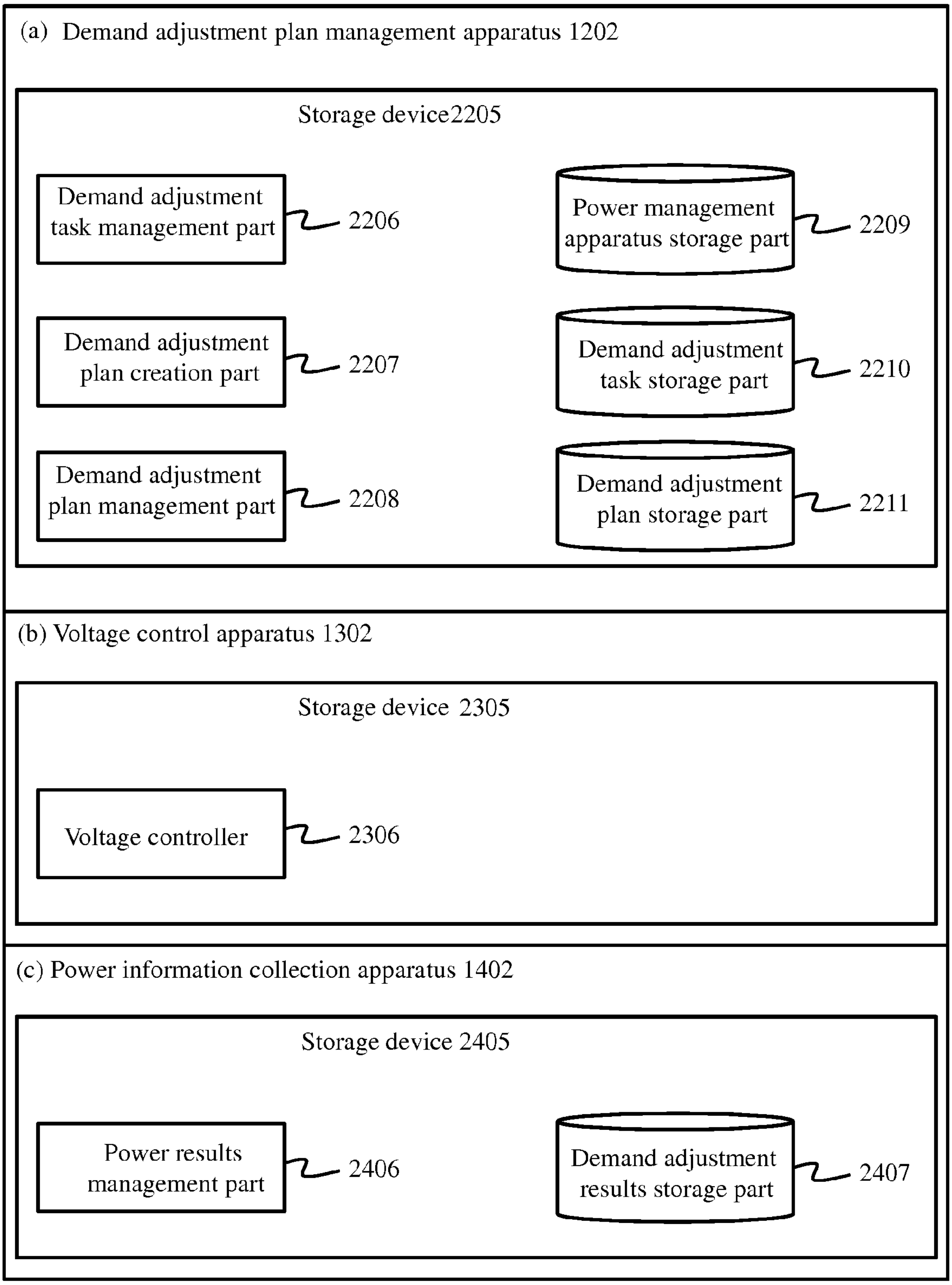
(a) Demand adjustment plan management apparatus 1202
Storage device2205
Demand adjustment task management part
2206
Demand adjustment plan creation part
2207
Demand adjustment plan management part
2208
Power management apparatus storage part
2209
Demand adjustment task storage part
2210
Demand adjustment plan storage part
2211
(b) Voltage control apparatus 1302
Storage device 2305
Voltage controller
2306
(c) Power information collection apparatus 1402
Storage device 2405
Power results management part
2406
Demand adjustment results storage part
2407

【Fig. 7】

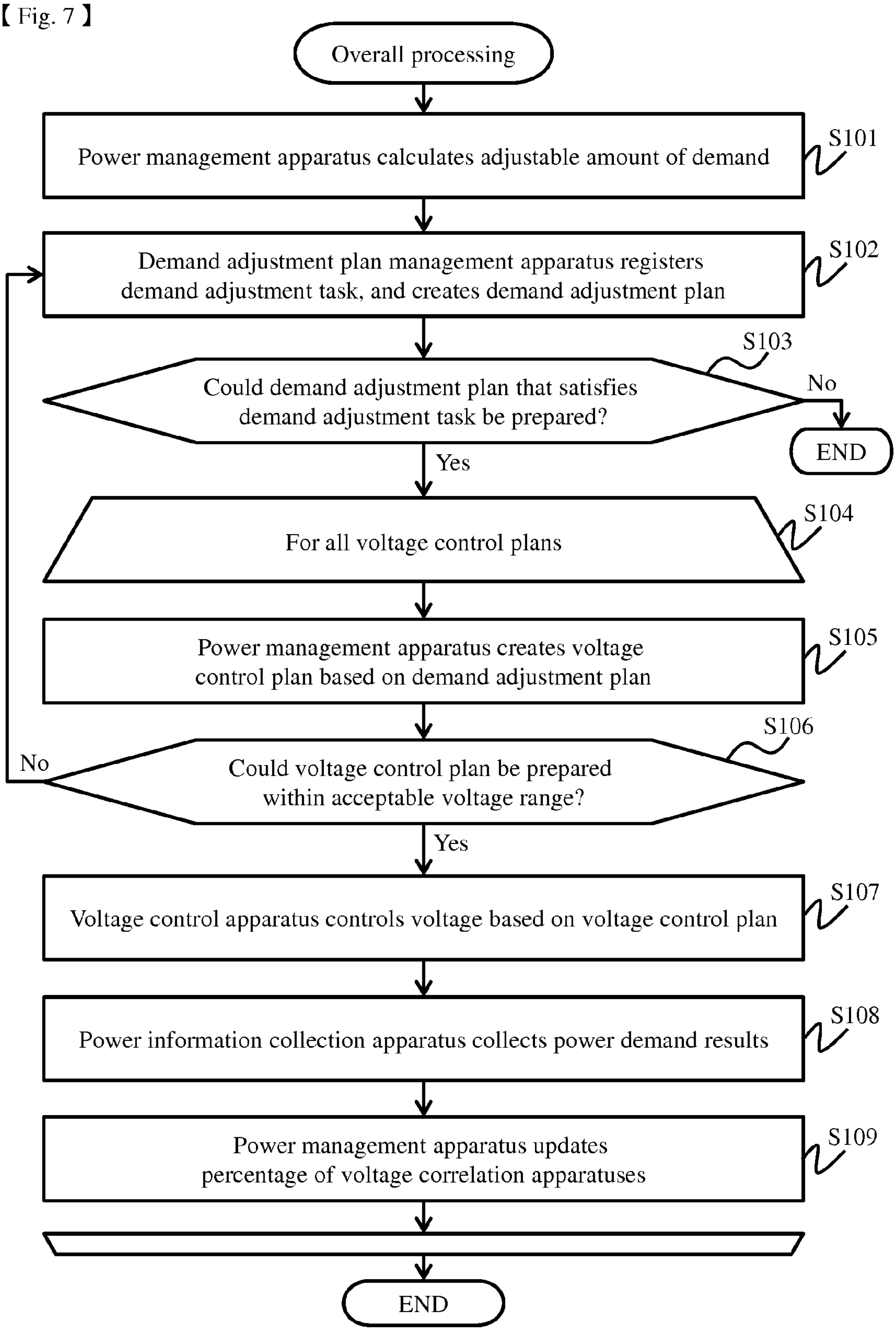

Overall processing
Power management apparatus calculates adjustable amount of demand
S101
Demand adjustment plan management apparatus registers demand adjustment task, and creates demand adjustment plan
S102
S103
Could demand adjustment plan that satisfies demand adjustment task be prepared?
No
END
Yes
For all voltage control plans
S104
Power management apparatus creates voltage control plan based on demand adjustment plan
S105
S106
No
Could voltage control plan be prepared within acceptable voltage range?
Yes
Voltage control apparatus controls voltage based on voltage control plan
S107
Power information collection apparatus collects power demand results
S108
Power management apparatus updates percentage of voltage correlation apparatuses
S109
END

【Fig. 8】

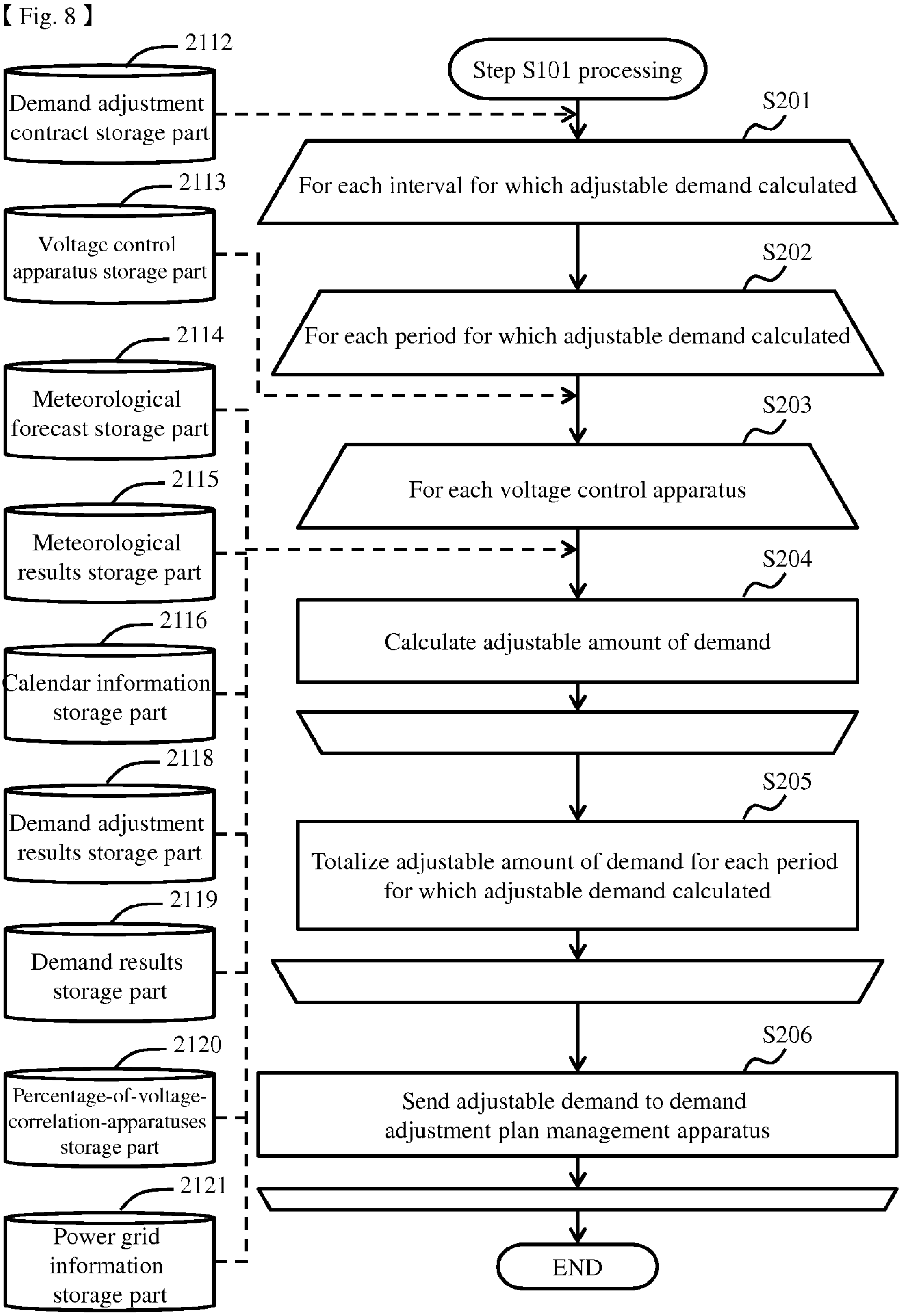
2112
Demand adjustment contract storage part
2113
Voltage control apparatus storage part
2114
Meteorological forecast storage part
2115
Meteorological results storage part
2116
Calendar information storage part
2118
Demand adjustment results storage part
2119
Demand results storage part
2120
Percentage-of-voltage-correlation-apparatuses storage part
2121
Power grid information storage part
Step S101 processing
S201
For each interval for which adjustable demand calculated
S202
For each period for which adjustable demand calculated
S203
For each voltage control apparatus
S204
Calculate adjustable amount of demand
S205
Totalize adjustable amount of demand for each period for which adjustable demand calculated
S206
Send adjustable demand to demand adjustment plan management apparatus
END

【Fig. 9】

(a) Demand adjustment contract table

| | Contract ID | Management Apparatus ID | Baseline | Calculation formula | Calculation interval | Calculation period | Reservation unit cost | Utilization unit cost | Penalty |
|---|---|---|---|---|---|---|---|---|---|
| T101 | C01 | DBPM01 | Maximum value for the month | Maximum demand for time slot – baseline | 15min | 48h | \10,000 /kW | \20,000 /kW | Yes |
| T102 | C02 | DBPM02 | Time-averaged value for the week | Maximum demand for time slot – baseline | 30min | 24h | \9,000 /kW | \30,000 /kW | Yes |
| T103 | C03 | DBPM03 | Maximum value for the month | Maximum demand for time slot – baseline | 60min | 96h | \14,000 /kW | Market price | No |

(b) Voltage control apparatus table

| | Voltage control apparatus ID | Map mesh ID | Voltage control method |
|---|---|---|---|
| T201 | VCM01 | M001 | Continuous value |
| T202 | VCM02 | M002 | Discrete value |
| T203 | VCM03 | M003 | Discrete value |

(c) Meteorological forecast table

| | Meteorological information ID | Map mesh ID | Weather | Temperature | Solar radiation | Humidity | Wind direction | Wind speed | Date/time |
|---|---|---|---|---|---|---|---|---|---|
| T301 | WI001 | M001 | Rainy | 22°C | 1.4 $MJ/m^2$ | 80% | E | 1m | 2012/08/16 18:00 |
| T302 | WI002 | M002 | Clear | 30°C | 2.0 $MJ/m^2$ | 10% | EW | 2m | 2013/02/03 11:00 |
| T303 | WI003 | M003 | Cloudy | 14°C | 1.6 $MJ/m^2$ | 40% | S | 2m | 2012/11/01 15:00 |

Fig. 10

(a) Meteorological results table

| | Meteorological information ID | Map mesh ID | Weather | Temperature | Solar radication | Humidity | Wind direction | Wind speed | Date/time |
|---|---|---|---|---|---|---|---|---|---|
| T401 | WI001 | M001 | Cloudy | 21°C | 1.3 $MJ/m^2$ | 70% | E | 1.2m | 2012/08/16 18:00 |
| T402 | WI002 | M002 | Clear | 30°C | 2.0 $MJ/m^2$ | 10% | EW | 2m | 2013/02/03 11:00 |
| T403 | WI003 | M003 | Cloudy | 14°C | 1.6 $MJ/m^2$ | 40% | S | 2m | 2012/11/01 15:00 |

(b) Calendar information table

| | Calendar information ID | Date | Day of week | Classification (workday, non-workday, national holiday) |
|---|---|---|---|---|
| T501 | CAL01 | 2012/08/16 | Sunday | Non-workday |
| T502 | CAL02 | 2010/12/24 | Wednesday | Non-workday |
| T503 | CAL03 | 2012/11/01 | Thursday | Workday |

(c) Voltage control plan table

| | Voltage control plan ID | Voltage control apparatus ID | Voltage target value | Control start time | Target-voltage-reached time | Reset control start time | Standard-voltage-reached time |
|---|---|---|---|---|---|---|---|
| T601 | VCP01 | VCM01 | 6500V | 2013/ 08/16 17:30 | 2013/ 08/16 17:45 | 2013/ 08/16 20:15 | 2013/ 08/16 20:30 |
| T602 | VCP02 | VCM02 | 6350V | 2013/ 07/20 18:00 | 2013/ 07/20 18:30 | 2013/ 08/31 18:00 | 2013/ 08/31 18:15 |
| T603 | VCP03 | VCM04 | 6700V | 2013/ 11/06 10:00 | 2013/ 11/06 10:15 | 2013/ 11/07 10:00 | 2013/ 11/07 10:15 |

【Fig. 11】

(a) Demand adjustment results table

| | Demand adjustment results ID | Pre-adjustment demand | Post-adjustment demand | Demand adjustment amount | Voltage result | Voltage control plan ID | Demand adjustment start time | Demand adjustment end time |
|---|---|---|---|---|---|---|---|---|
| T701 | DBR01 | 1000kw | 970kw | 20kw | 97.5V | VCP01 | 2013/ 08/16 18:00 | 2013/ 08/16 18:15 |
| T702 | DBR02 | 1000kw | 960kw | 110kw | 103.5V | VCP01 | 2013/ 08/16 18:15 | 2013/ 08/16 18:30 |
| T703 | DBR03 | 2000kw | 2100kw | 500kw | 99.0V | VCP02 | 2013/ 11/06 10:00 | 2013/ 11/06 10:15 |

(b) Demand results table

| | Demand results ID | Voltage control apparatus ID | Meteorological information ID | Calendar information ID | Demand amount | Measurement start time | Measurement end time |
|---|---|---|---|---|---|---|---|
| T801 | DR01 | VCM01 | WI001 | CAL05 | 1000kw | 18:00 | 18:15 |
| T802 | DR02 | VCM02 | WI005 | CAL06 | 1000kw | 18:15 | 18:30 |
| T803 | DR03 | VCM03 | WI003 | CAL07 | 2000kw | 10:00 | 10:15 |

【Fig. 12】

(a) Percentage-of-voltage-correlation-apparatuses table

| | Percentage of voltage correlation apparatuses ID | Voltage control apparatus ID | Weather | Holidays | Time | Temperature | Percentage of voltage correlation apparatuses |
|---|---|---|---|---|---|---|---|
| T901 | VRR01 | VCM01 | Rainy | Non-workday | 18:00 | 21°C | 80% |
| T902 | VRR02 | VCM01 | Clear | Workday | 11:00 | 11°C | 60% |
| T903 | VRR03 | VCM02 | Cloudy | Non-workday | 04:00 | 8°C | 40% |

(b) Power grid information table

| | Voltage control apparatus ID | Electric current | Distance | Impedance | Distribution system | Acceptable grid voltage fluctuation |
|---|---|---|---|---|---|---|
| T1001 | VCM01 | 20A | 100m | 10.000% | Single-phase, three-wire | 1V/min |
| T1002 | VCM01 | 20A | 50m | 12.000% | Single-phase, three-wire | 1.2V/min |
| T1003 | VCM02 | 20A | 200m | 11.278% | Single-phase, three-wire | 1V/min |

(c) Adjustable-amount-of-demand table

| | Adjustable-amount-of-demand table ID | Voltage control apparatus ID | Adjustable amount of demand | Demand adjustment start time | Demand adjustment end time |
|---|---|---|---|---|---|
| T1101 | DBA01 | VCM01 | 20kw | 2013/08/16 18:00 | 2013/08/16 18:15 |
| T1102 | DBA02 | VCM02 | 110kw | 2013/08/16 18:15 | 2013/08/16 18:30 |
| T1103 | DBA03 | VCM03 | 500kw | 2013/08/16 10:00 | 2013/08/16 10:15 |

【Fig. 13】

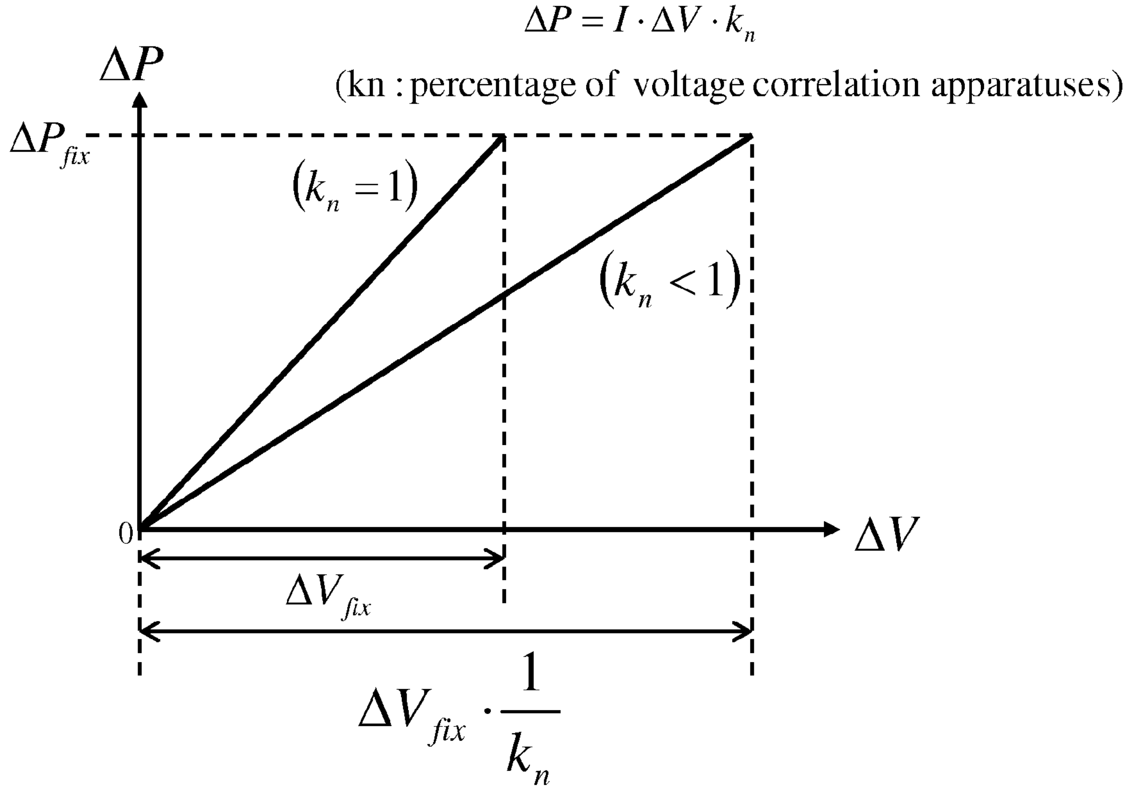

$\Delta P = I \cdot \Delta V \cdot k_n$
(kn : percentage of voltage correlation apparatuses)
$\Delta P$
$\Delta P_{fix}$
$(k_n = 1)$
$(k_n < 1)$
0
$\Delta V$
$\Delta V_{fix}$
$\Delta V_{fix} \cdot \frac{1}{k_n}$

【Fig. 14】

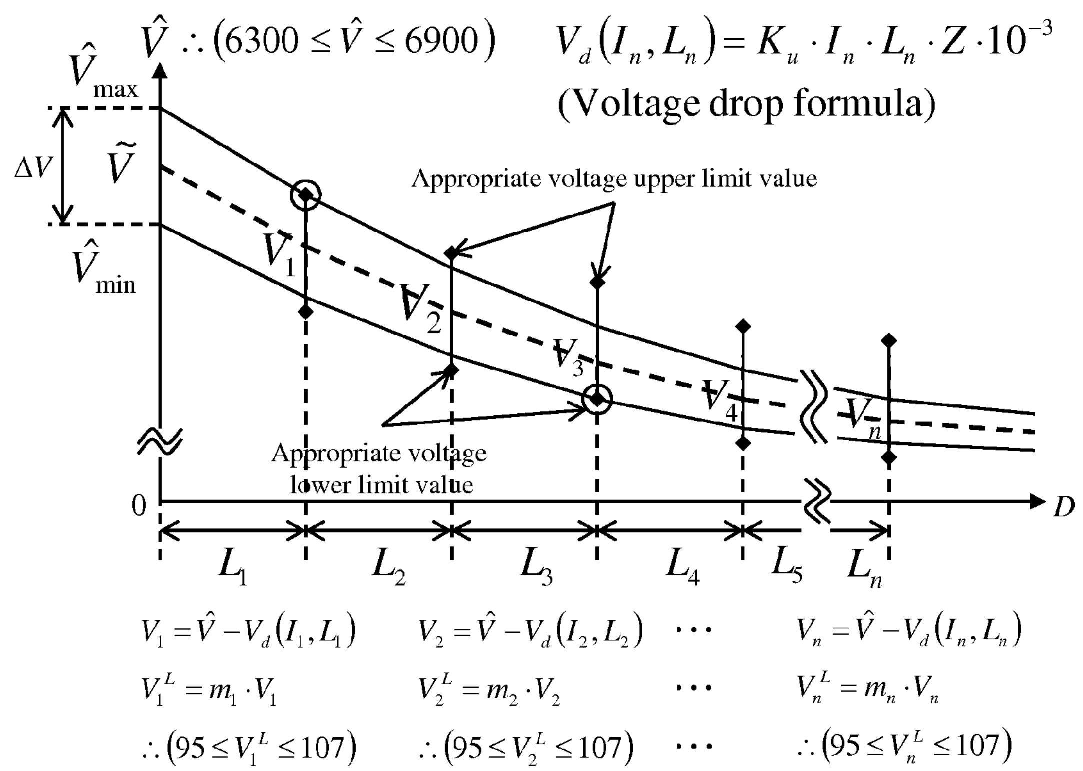

$\hat{V} \therefore (6300 \le \hat{V} \le 6900)$
$V_d(I_n, L_n) = K_u \cdot I_n \cdot L_n \cdot Z \cdot 10^{-3}$
(Voltage drop formula)
$\hat{V}_{max}$
$\Delta V$
$\tilde{V}$
$\hat{V}_{min}$
Appropriate voltage upper limit value
Appropriate voltage lower limit value
$V_1$
$V_2$
$V_3$
$V_4$
$V_n$
0
D
$L_1$
$L_2$
$L_3$
$L_4$
$L_5$
$L_n$
$V_1 = \hat{V} - V_d(I_1, L_1)$
$V_2 = \hat{V} - V_d(I_2, L_2)$
$\cdots$
$V_n = \hat{V} - V_d(I_n, L_n)$
$V_1^L = m_1 \cdot V_1$
$V_2^L = m_2 \cdot V_2$
$\cdots$
$V_n^L = m_n \cdot V_n$
$\therefore (95 \le V_1^L \le 107)$
$\therefore (95 \le V_2^L \le 107)$
$\cdots$
$\therefore (95 \le V_n^L \le 107)$

【Fig. 15】

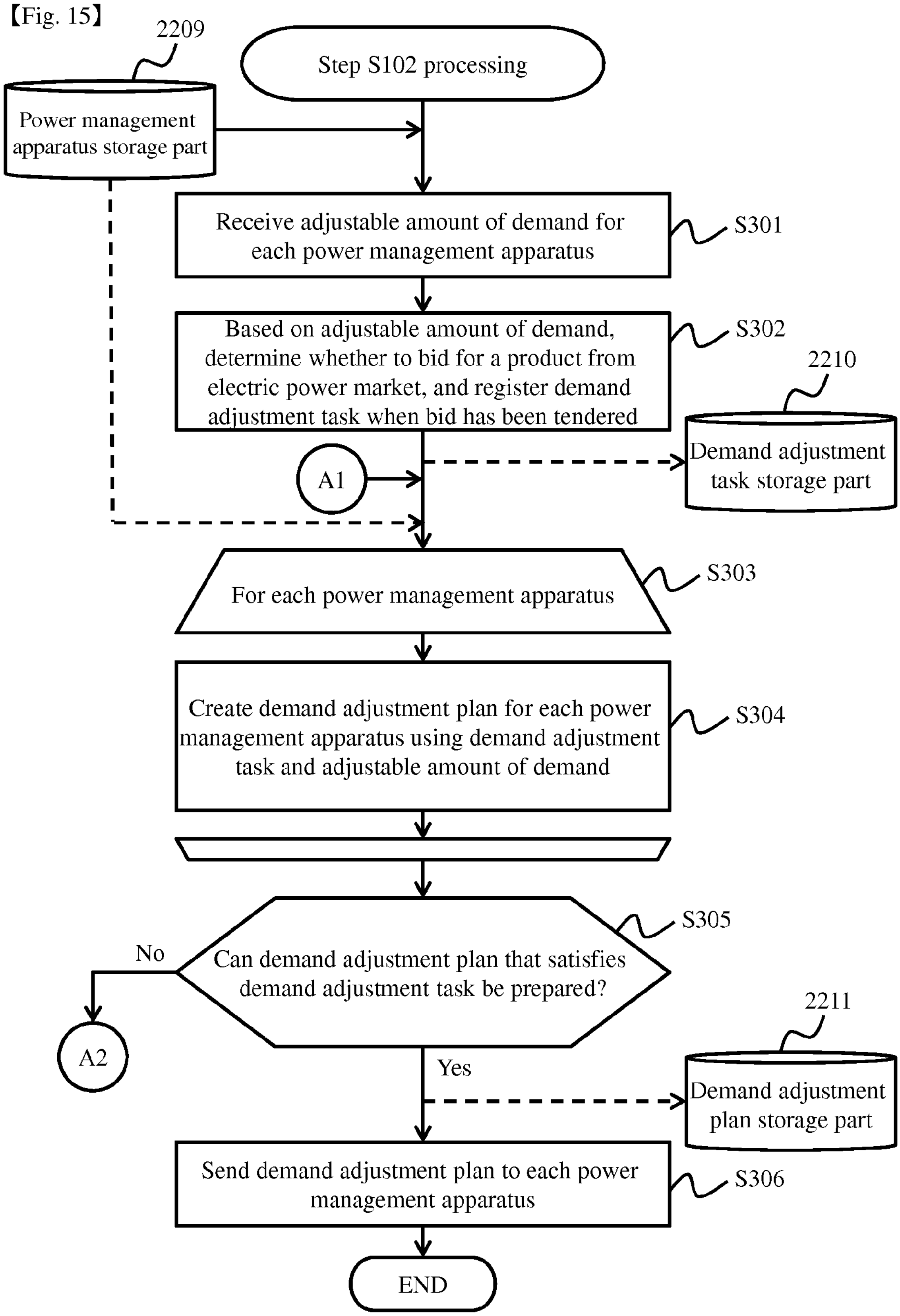
2209
Power management apparatus storage part
Step S102 processing
Receive adjustable amount of demand for each power management apparatus
S301
Based on adjustable amount of demand, determine whether to bid for a product from electric power market, and register demand adjustment task when bid has been tendered
S302
2210
Demand adjustment task storage part
A1
For each power management apparatus
S303
Create demand adjustment plan for each power management apparatus using demand adjustment task and adjustable amount of demand
S304
Can demand adjustment plan that satisfies demand adjustment task be prepared?
S305
No
A2
Yes
2211
Demand adjustment plan storage part
Send demand adjustment plan to each power management apparatus
S306
END

【Fig. 16】

(a) Power management apparatus table

| | Power management apparatus ID | Feeder ID |
|---|---|---|
| T1201 | PMM01 | |
| T1202 | PMM02 | |
| T1203 | PMM03 | |

(b) Demand adjustment task table

| | Demand adjustment task ID | Demand adjustment amount | Demand adjustment start time | Demand adjustment end time | Pre-instruction start time | Post-instruction end time |
|---|---|---|---|---|---|---|
| T1301 | DMT01 | 10000kw | 2012/08/16 18:00 | 2012/08/16 20:00 | 2012/08/16 16:30 | 2012/08/16 21:30 |
| T1302 | DMT02 | -2000kw | 2012/12/26 04:00 | 2012/12/26 07:00 | 2012/12/26 04:30 | 2012/12/26 07:30 |
| T1303 | DMT03 | 5000kw | 2012/04/11 17:00 | 2012/04/11 18:00 | 2012/04/11 16:00 | 2012/04/11 18:30 |

【Fig. 17】

| | Demand adjustment plan table | | | | | | | |
|---|---|---|---|---|---|---|---|---|
| | Demand adjustment plan ID | Demand adjustment task ID | Power management apparatus ID | Demand-adjustment-request amount | Demand adjustment start time | Demand adjustment end time | Pre-instruction start time | Post -instruction end time |
| T1401 | DBP01 | DMT01 | PMM01 | -1000kw | 2012/08/16 18:00 | 2012/08/16 20:00 | 2012/08/16 16:30 | 2012/08/16 21:30 |
| T1402 | DBP04 | DMT04 | PMM02 | 200kw | 2012/12/26 04:00 | 2012/12/26 07:00 | 2012/12/26 04:30 | 2012/12/16 07:30 |
| T1403 | DBP05 | DMT06 | PMM03 | -500kw | 2012/04/11 17:00 | 2012/04/11 18:00 | 2012/04/11 16:00 | 2012/04/11 18:30 |

【Fig. 18】

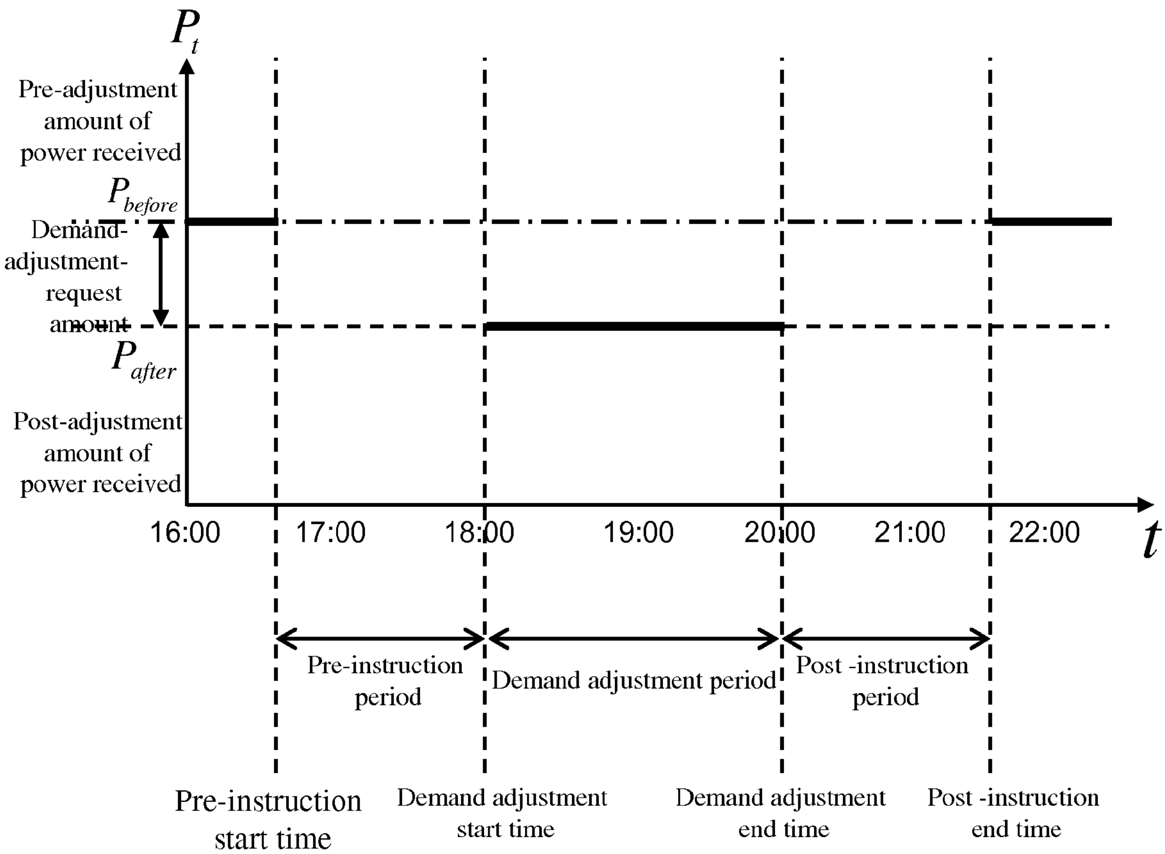

$P_t$
Pre-adjustment amount of power received
$P_{before}$
Demand-adjustment-request amount
$P_{after}$
Post-adjustment amount of power received
16:00
17:00
18:00
19:00
20:00
21:00
22:00
t
Pre-instruction period
Demand adjustment period
Post -instruction period
Pre-instruction start time
Demand adjustment start time
Demand adjustment end time
Post -instruction end time

【Fig. 19】

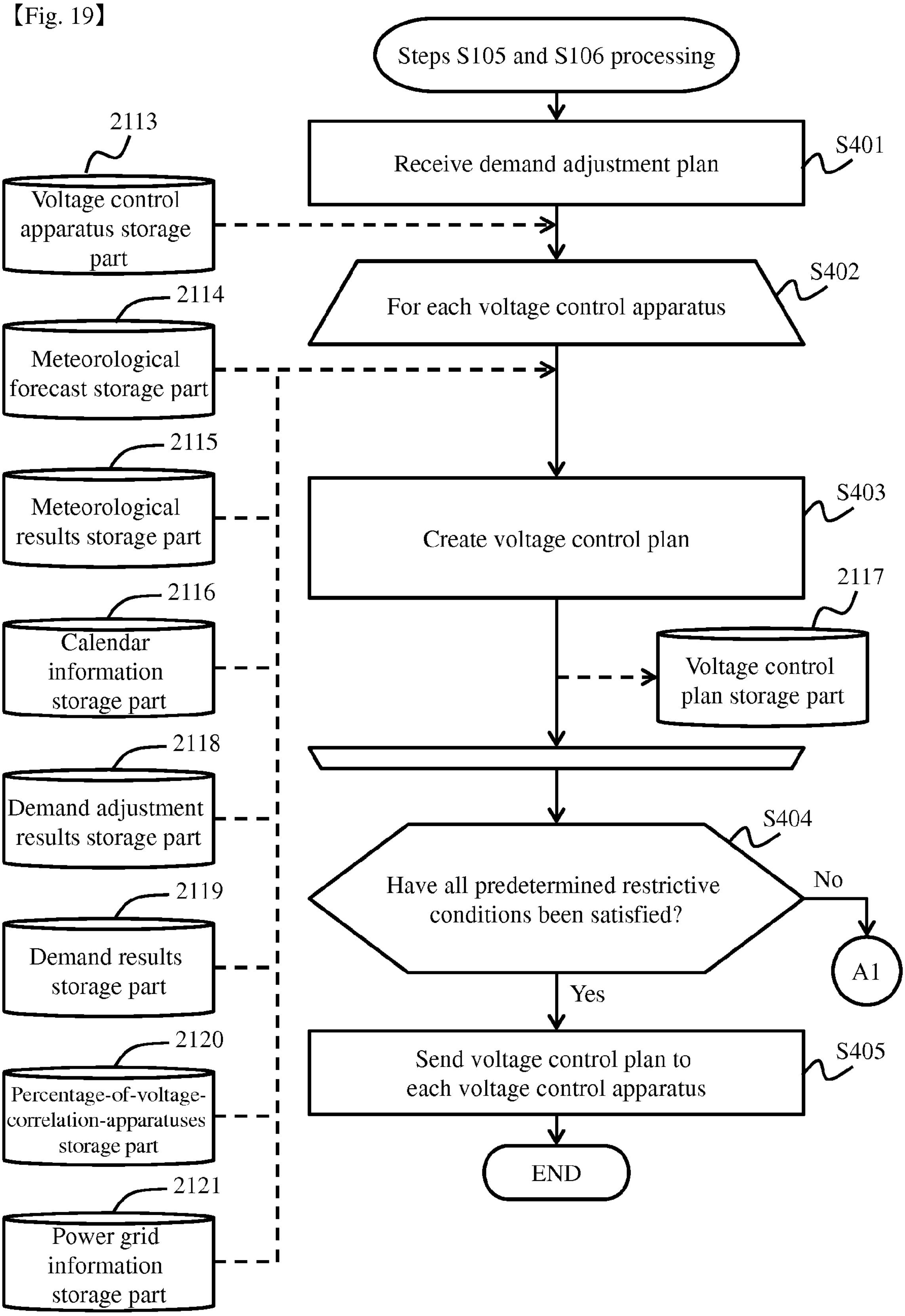
Steps S105 and S106 processing
Receive demand adjustment plan
S401
2113
Voltage control apparatus storage part
For each voltage control apparatus
S402
2114
Meteorological forecast storage part
2115
Meteorological results storage part
Create voltage control plan
S403
2116
Calendar information storage part
2117
Voltage control plan storage part
2118
Demand adjustment results storage part
S404
Have all predetermined restrictive conditions been satisfied?
No
A1
Yes
2119
Demand results storage part
2120
Percentage-of-voltage-correlation-apparatuses storage part
Send voltage control plan to each voltage control apparatus
S405
END
2121
Power grid information storage part

【Fig. 20】

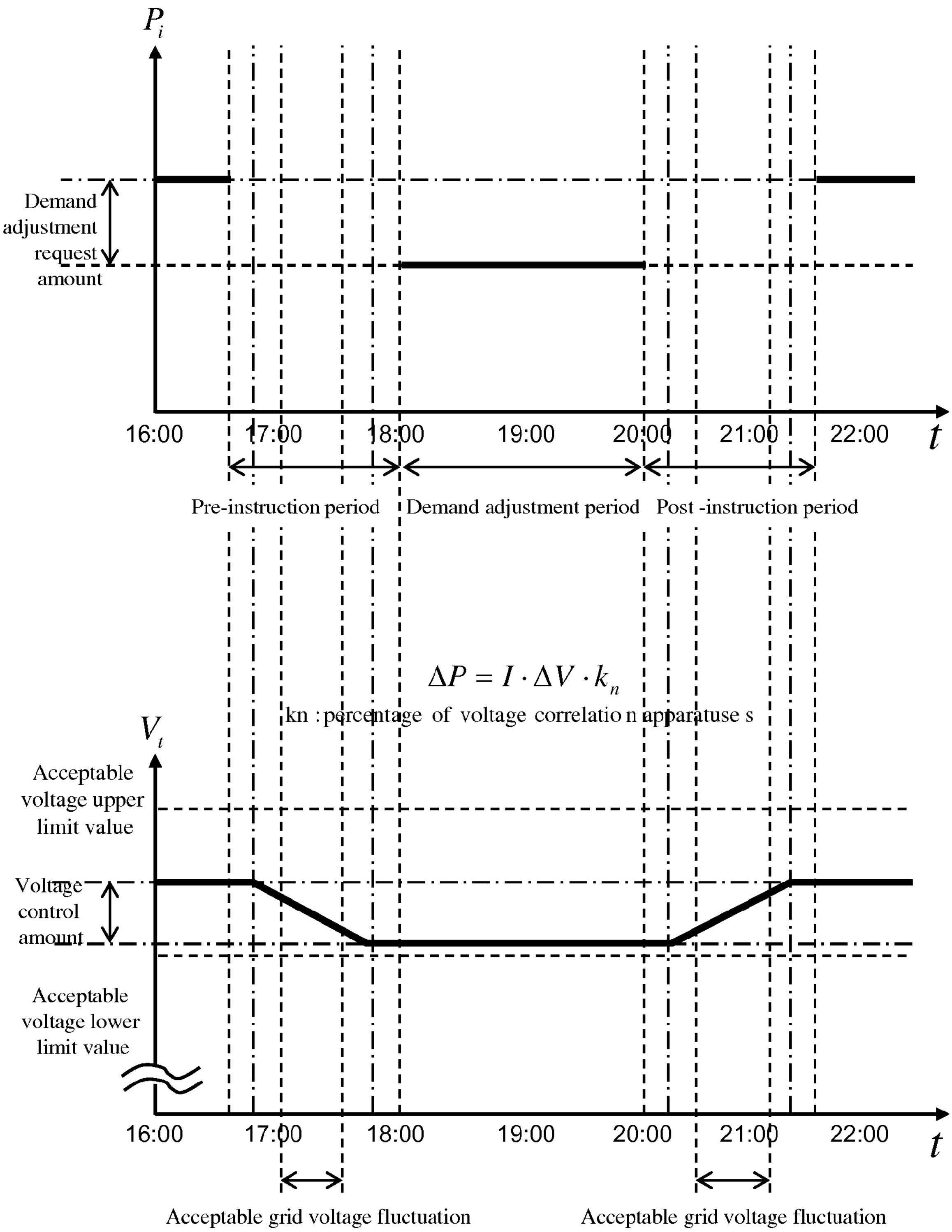
$P_i$
Demand adjustment request amount
16:00
17:00
18:00
19:00
20:00
21:00
22:00
t
Pre-instruction period
Demand adjustment period
Post -instruction period
$\Delta P = I \cdot \Delta V \cdot k_n$
kn : percentage of voltage correlatio n apparatuse s
$V_t$
Acceptable voltage upper limit value
Voltage control amount
Acceptable voltage lower limit value
16:00
17:00
18:00
19:00
20:00
21:00
22:00
t
Acceptable grid voltage fluctuation
Acceptable grid voltage fluctuation

【Fig. 21】

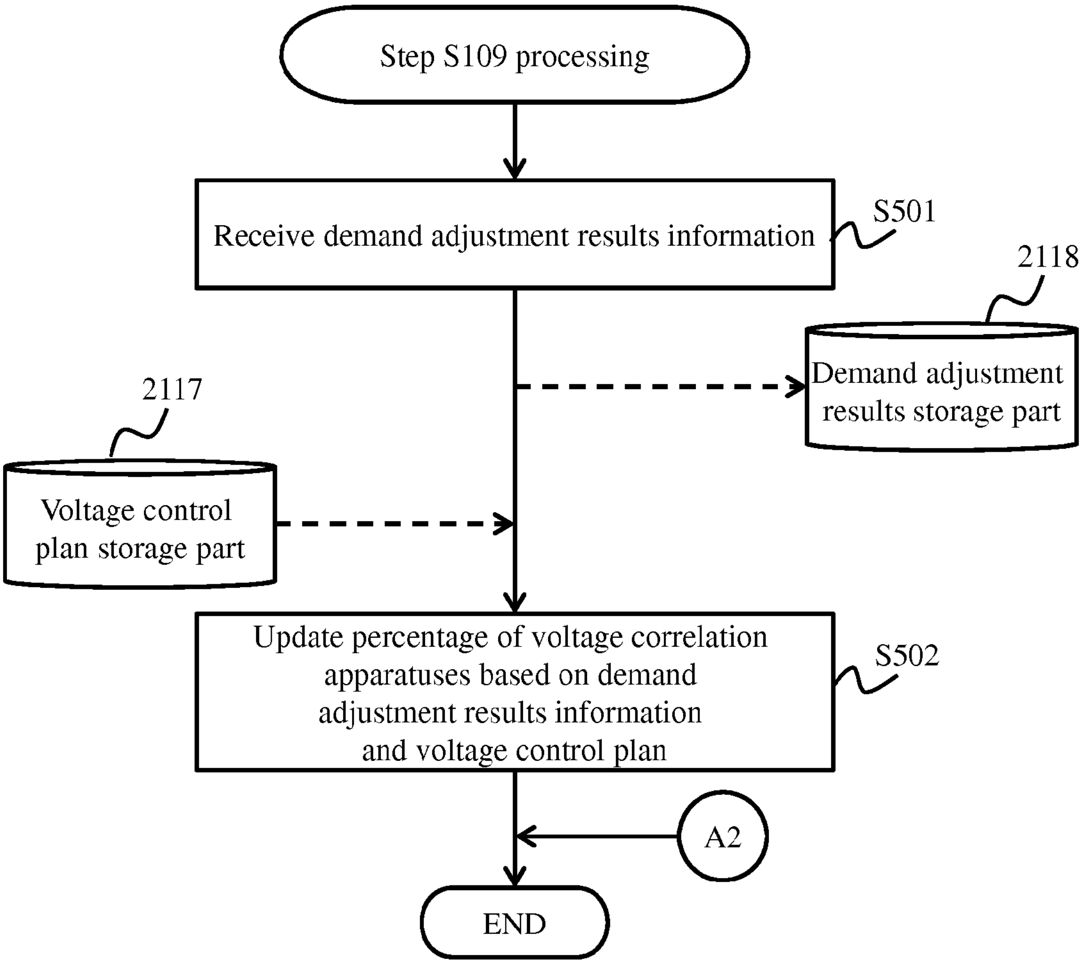
Step S109 processing
Receive demand adjustment results information
S501
2118
Demand adjustment results storage part
2117
Voltage control plan storage part
Update percentage of voltage correlation apparatuses based on demand adjustment results information and voltage control plan
S502
A2
END

Europäisches Patentamt
European Patent Office
Office européen des brevets

# EUROPEAN SEARCH REPORT

Application Number
EP 14 18 7995

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/187550 A1 (WILSON THOMAS L [US] ET AL) 2 October 2003 (2003-10-02)<br>* the whole document * | 1,8-12 | INV.<br>H02J3/12<br>G06Q50/06<br>H02J3/14 |
| X | US 2013/110304 A1 (SHIGA YASUKO [JP] ET AL) 2 May 2013 (2013-05-02)<br>* paragraphs [0012] - [0082]; figures 1-5 * | 12 | |
| A | US 2010/179704 A1 (OZOG MICHAEL T [US]) 15 July 2010 (2010-07-15)<br>* the whole document * | 1-12 | |
| A | US 8 280 656 B2 (KREISS DAVID G [US] ET AL) 2 October 2012 (2012-10-02)<br>* the whole document * | 1-12 | |
| A | US 2012/158198 A1 (BLACK JASON WAYNE [US] ET AL) 21 June 2012 (2012-06-21)<br>* the whole document * | 1-12 | TECHNICAL FIELDS SEARCHED (IPC) |
| A | JP 2012 044746 A (PANASONIC CORP) 1 March 2012 (2012-03-01)<br>* the whole document * | 1-12 | H02J<br>G06Q |
| A | JP 2011 234577 A (TSUKEN ELECTRIC IND CO LTD) 17 November 2011 (2011-11-17)<br>* abstract * | 1-12 | |

The present search report has been drawn up for all claims

1

| Place of search | Date of completion of the search | Examiner |
|---|---|---|
| Munich | 29 January 2015 | Lorenzo Feijoo, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 18 7995

This annex lists the patent family members relating to the patent documents cited in the above-mentioned European search report. The members are as contained in the European Patent Office EDP file on
The European Patent Office is in no way liable for these particulars which are merely given for the purpose of information.

29-01-2015

| Patent document cited in search report | Publication date | Patent family member(s) | Publication date |
|---|---|---|---|
| US 2003187550 A1 | 02-10-2003 | NONE | |
| US 2013110304 A1 | 02-05-2013 | CN 102844952 A | 26-12-2012 |
| | | EP 2560262 A1 | 20-02-2013 |
| | | JP 5619148 B2 | 05-11-2014 |
| | | US 2013110304 A1 | 02-05-2013 |
| | | WO 2011129054 A1 | 20-10-2011 |
| US 2010179704 A1 | 15-07-2010 | AU 2010204729 A1 | 01-09-2011 |
| | | CA 2749770 A1 | 22-07-2010 |
| | | EP 2387776 A1 | 23-11-2011 |
| | | US 2010179704 A1 | 15-07-2010 |
| | | US 2011035073 A1 | 10-02-2011 |
| | | WO 2010083334 A1 | 22-07-2010 |
| US 8280656 B2 | 02-10-2012 | EP 2081273 A2 | 22-07-2009 |
| | | US 2009187284 A1 | 23-07-2009 |
| | | US 2011270454 A1 | 03-11-2011 |
| | | US 2011270457 A1 | 03-11-2011 |
| | | US 2011270550 A1 | 03-11-2011 |
| US 2012158198 A1 | 21-06-2012 | AU 2011253992 A1 | 05-07-2012 |
| | | BR PI1105230 A2 | 09-04-2013 |
| | | CA 2761338 A1 | 17-06-2012 |
| | | EP 2466714 A2 | 20-06-2012 |
| | | JP 2012135193 A | 12-07-2012 |
| | | NZ 597079 A | 28-06-2013 |
| | | US 2012158198 A1 | 21-06-2012 |
| JP 2012044746 A | 01-03-2012 | NONE | |
| JP 2011234577 A | 17-11-2011 | JP 5309077 B2 | 09-10-2013 |
| | | JP 2011234577 A | 17-11-2011 |
| | | WO 2011136204 A1 | 03-11-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005168258 A